(19) Europäisches Patentamt
European Patent Office
Office européen des brevets

(11) **EP 2 541 155 B1**

(12) **EUROPEAN PATENT SPECIFICATION**

(45) Date of publication and mention of the grant of the patent:
**24.02.2016 Bulletin 2016/08**

(21) Application number: **12748144.8**

(22) Date of filing: **18.04.2012**

(51) Int Cl.:
*F24D 3/00* *(2006.01)*    *F24D 3/18* *(2006.01)*
*F24D 19/10* *(2006.01)*    *G05D 23/19* *(2006.01)*
*H02J 3/14* *(2006.01)*

(86) International application number:
**PCT/JP2012/002700**

(87) International publication number:
**WO 2012/147311 (01.11.2012 Gazette 2012/44)**

(54) **HEATING SYSTEM, AND HEATING SYSTEM CONTROL METHOD**

HEIZSYSTEM UND STEUERVERFAHREN FÜR DAS HEIZSYSTEM

SYSTÈME DE CHAUFFAGE, ET PROCÉDÉ DE COMMANDE DE SYSTÈME DE CHAUFFAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.04.2011 JP 2011098707**

(43) Date of publication of application:
**02.01.2013 Bulletin 2013/01**

(73) Proprietor: **Panasonic Intellectual Property Management Co., Ltd.**
**Osaka-shi, Osaka 540-6207 (JP)**

(72) Inventors:
• **FUKUOKA, Masaru**
**Osaka-shi,**
**Osaka 540-6207 (JP)**
• **TAKASAKI, Shinichi**
**Osaka-shi,**
**Osaka 540-6207 (JP)**
• **HAYASHIDA, Gaku**
**Osaka-shi,**
**Osaka 540-6207 (JP)**

(74) Representative: **Grünecker Patent- und Rechtsanwälte**
**PartG mbB**
**Leopoldstraße 4**
**80802 München (DE)**

(56) References cited:
EP-A1- 0 688 085     DE-A1-102009 057 815
JP-A- 6 197 450      JP-A- 2005 030 705
JP-A- 2005 030 705   JP-A- 2009 204 298
JP-A- 2009 204 299   US-A- 5 462 225
US-A1- 2005 005 621

**Description**

[Technical Field]

The present invention relates to heating systems, and particularly to a heat pump heating system.

[Background Art]

With the goal of equalizing the power load, energy suppliers in some European countries (such as Germany), as per contract, externally enforce a stop of electricity delivery (hereinafter shut-off) to heat pump heating systems for a predetermined period of time (hereinafter shut-off period, SOP) a predetermined number of times per day, offering in return a reduced energy rate.
In order to accommodate this external control, manufacturers of heat pump heating systems provide a relay switch in the system which turns the power on or off when a ripple signal is received from the energy supplier.

[Citation List]

[Patent Literature] Document JP 2005030705 discloses a heating system according to the preamble of claims 1 and 14.
[PTL 1] Japanese Unexamined Patent Application Publication No. 2009-204298
[PTL 2] Japanese Unexamined Patent Application Publication No. 2009-204299

[Summary of Invention]

[Technical Problem]

However, with the foregoing control method, the heat pump heating system is immediately shut off when a shut-off signal is received from the energy supplier. Consequently, room temperature decreases as time passes. As such, there is a concern that the comfort of the user will be compromised. When power is shut off when not enough heat has been stored in the storage tank or within the housing frame in particular, room temperature decreases significantly, causing discomfort for the user. In this case, a problem arises when the heat pump heating system is installed in a home having poor thermal insulation efficiency.
Thus, in light of the foregoing information, an object of the present invention is to provide a heat pump heating system and a heat pump heating system control method that can adequately store heat needed for the period when the supply of power is temporarily stopped by the shut-off signal.

[Solution to Problem]

The heating system according to an embodiment of the present invention receives power from a power supply source and maintains a temperature of a target to within a predetermined temperature range including a predetermined set temperature. Specifically, the heating system includes: a heat pump unit configured to generate heat using power supplied from the power supply source; a radiator unit configured to radiate the heat generated by the heat pump unit to the target; and a heating system control unit configured to cause the heat pump unit to stop generating the heat during a predetermined shut-off period, and to cause the heat pump unit to generate additional heat as shut-off period (SOP) heat in periods before and after the shut-off period, the SOP heat being an amount of heat required to be radiated during the shut-off period by the radiator unit to maintain the set temperature of the target. Also, the heating system control unit is configured to cause the generation of the SOP heat to be divided between the periods before and after the shut-off period such that a peak value of power consumption in each of the periods before and after the shut-off period is at or below a permissible peak power.
It is to be noted that general or specific embodiments may be realized as a system, method, integrated circuit, computer program, storage media, or any elective combination thereof.

[Advantageous Effects of Invention]

With the present invention, since the generation of SOP heat is divided then generated such that the peak power consumption values in each of the periods before and after of the shut-off period are at or below the permissible peak power, in addition to maintaining comfort, peaks in energy can equalized throughout the periods before and after the shut-off period.

[Brief Description of Drawings]

[FIG. 1] FIG. 1 is a diagram showing the heat pump heating system according to the first embodiment.
[FIG. 2] FIG. 2 is a block diagram showing the heat pump heating device and the heating system control unit according to the first embodiment in detail.
[FIG. 3] FIG. 3 is a flow chart illustrating the processes involved in generating the operation plan for the heat pump heating device according to the first embodiment.
[FIG. 4A] FIG. 4A is a table showing a power consumption prediction result when the pre-SOP goal room temperature is 24 degrees Celsius.
[FIG. 4B] FIG. 4B is a table showing a calculation result of the peak overall power consumption value for each of the pre-SOP goal room temperatures.
[FIG. 5A] FIG. 5A is a graph showing shifts in heat pump (HP) heat output and room temperature for each of the pre-SOP goal room temperatures.
[FIG. 5B] FIG. 5B is a graph showing shifts in power consumption for each of the pre-SOP goal room temperatures.
[FIG. 6] FIG. 6 is a flow chart illustrating the processes involved in generating the operation plan for the heat pump heating device according to the second embodiment.
[FIG. 7] FIG. 7 is a table showing a calculation result of the peak overall power consumption value for each of the pre-SOP goal room temperatures.
[FIG. 8] FIG. 8 is a flow chart illustrating the processes involved in generating the operation plan for the heat pump heating device according to the third embodiment.
[FIG. 9A] FIG. 9A is a graph showing shifts in HP heat output and room temperature for each of the pre-SOP goal room temperatures.
[FIG. 9B] FIG. 9B is a graph showing shifts in power consumption for each of the pre-SOP goal room temperatures.
[FIG. 10] FIG. 10 is a table showing a calculation result of the peak overall power consumption value for each of the pre-SOP goal room temperatures.
[FIG. 11] FIG. 11 is a table showing an example of the permissible peak power which varies depending on flooring surface area.
[FIG. 12] FIG. 12 is a table showing an example of the permissible peak power which varies depending on the rated capacity of the heat pump heating device.

[Description of Embodiments]

The heating system according to an embodiment of the present invention receives power from a power supply source and maintains a temperature of a target to within a predetermined temperature range including a predetermined set temperature. Specifically, the heating system includes: a heat pump unit configured to generate heat using power supplied from the power supply source; a radiator unit configured to radiate the heat generated by the heat pump unit to the target; and a heating system control unit configured to cause the heat pump unit to stop generating the heat during a predetermined shut-off period, and to cause the heat pump unit to generate additional heat as shut-off period (SOP) heat in periods before and after the shut-off period, the SOP heat being an amount of heat required to be radiated during the shut-off period by the radiator unit to maintain the set temperature of the target. Also, the heating system control unit is configured to cause the generation of the SOP heat to be divided between the periods before and after the shut-off period such that a peak value of power consumption in each of the periods before and after the shut-off period is at or below a permissible peak power.

With the configuration above, a heating system can be realized which diminishes peak power consumption in the time periods before and after the shut-off period by dividing up the generation of and generating the SOP heat (heat to be radiated in the shut-off period) in the periods before and after the shut-off period.

The heating system control unit may further include: a predicting unit configured to, in each of the periods before and after the shut-off period, predict a shift in generation power consumption which is an amount of power consumed by the heat pump unit for generating heat to maintain the temperature of the target at the set temperature, a shift in additional power consumption which is an amount of power needed for the heat pump unit to generate the divided SOP heat, and a shift in general power consumption which is an amount of power consumed by a device outside of the heating system; and an operation plan unit configured to generate an operation plan for dividing and causing the generation of the SOP heat such that a peak value of overall power consumption in each of the periods before and after the shut-off period is at or below the permissible peak power, the overall power consumption being a total of the general power consumption, the generation power consumption, and the additional power consumption. The heating system control unit is configured to control the heat pump according to the operation plan generated by the operation plan unit.

Moreover, the additional power consumption in the period before the shut-off period may be an amount of power consumed by the heat pump unit to increase the temperature of the target to a pre-SOP goal temperature by a start of the shut-off period, the pre-SOP goal temperature being higher than the set temperature. Similarly, the additional power consumption in the period after the shut-off period may be an amount of power consumed by the heat pump unit to increase the temperature of the target at an end of the shut-off period to the set temperature. Furthermore, the heating system control unit may include a detecting unit configured to detect the temperature of the target and an ambient temperature. The predicting unit may be configured to predict, based on a result of the detection by the detecting unit, the shift in the additional power consumption in each of the periods before and after the shut-off period.

Moreover, the operation plan unit may be configured to select, from among a plurality of the pre-SOP goal temperatures for the peak values of the overall power consumption in each of the periods before and after the shut-off period that are at or below the permissible peak power, the pre-SOP goal temperature for a lowest value of the peak values of the overall power consumption values throughout each of the periods before and after the shut-off period. With this, peaks in power consumption in the periods before and after the shut-off period can be further suppressed.

Moreover, the operation plan unit may be configured to select, from among a plurality of the pre-SOP goal temperatures for the peak values of the overall power consumption in each of the periods before and after the shut-off period that are at or below the permissible peak power, the pre-SOP goal temperature for a lowest temperature of the target during the shut-off period that is greater than or equal to a threshold temperature. With this, peaks in power consumption can be suppressed, and furthermore, since the temperature in the shut-off period does not drop below the threshold temperature, disruption of user comfort can be curtailed.

Moreover, the predicting unit may be configured to predict a shut-off time for each of the plurality of pre-SOP goal temperatures, the shut-off time being a period of time starting when the temperature of the target decreases from the pre-SOP goal temperature and ending when the temperature of the target reaches the threshold temperature. The heating system control unit may be configured to cause the heat pump unit to generate the SOP heat allotted to the period after the shut-off period at a point in time at which the shut-off time corresponding to the selected pre-SOP goal temperature has elapsed from the start of the shut-off period. With this, the comfort level of the user is further maintained.

Furthermore, the operation plan unit may be configured to select, from among the plurality of pre-SOP goal temperatures, the pre-SOP goal temperature which maximizes the shut-off time.

Moreover, the operation plan unit may be configured to execute processing of generating the operation plan upon receiving a signal including information specifying the shut-off period from the power supply source, the signal being received by the operation plan unit a predetermined amount of time before the start of the shut-off period.

Furthermore, the signal further may include information indicating the permissible peak power.

Moreover, the heating system control unit may be configured to receive an input of the permissible peak power from a user.

Moreover, the permissible peak power may be set based on a thermal insulation efficiency of a building in which the heating system is installed.

Moreover, the permissible peak power for the period before the shut-off period and the period after the shut-off period may be set individually so that the permissible peak power for the period before the shut-off period is greater than the permissible peak power for the period after the shut-off period. It is probable that the margin of error for the predicted value of the overall power consumption occurring in the period before the shut-off period is greater than the predicted value of the overall power consumption occurring in the period before the shut-off period. As such, by setting the permissible peak power relatively low for the time period after the shut-off period, peaks in power consumption can be diminished with greater certainty.

Moreover, the heating system may comprise: a heating device including the heat pump unit, the radiator unit, and a heat pump (HP) control unit which controls the heat pump unit in accordance with an instruction from the heating system control unit; and the heating system control unit which is structurally separate from the heating device.

With the foregoing configuration, the heating system control unit can control not only the heating device, but other electronic devices as well. Moreover, when used in an environment in which the shut-off function is not necessary, it is suitable to install simply the heating device.

A method of controlling a heating system according to an embodiment of the present invention receives power from a power supply source and maintains a temperature of a target to within a predetermined temperature range including a predetermined set temperature. The heating system includes a heat pump unit configured to generate heat using power supplied from the power supply source, and a radiator unit configured to radiate the heat generated by the heat pump unit to the target. The method of controlling the heating system comprises causing the heat pump unit to (i) stop generating the heat during a predetermined shut-off period and (ii) generate additional heat as shut-off period (SOP) heat in periods before and after the shut-off period, the SOP heat being an amount of heat required to be radiated during the shut-off period by the radiator unit to maintain the set temperature of the target. In the causing, the generation of the SOP heat is divided between the periods before and after the shut-off period such that a peak value of power consumption in each of the periods before and after the shut-off period is at or below a permissible peak power.

Furthermore, the causing may comprise: predicting, in each of the periods before and after the shut-off period, a shift in generation power consumption which is an amount of power consumed by the heat pump unit for generating heat to maintain the temperature of the target at the set temperature, a shift in additional power consumption which is an amount of power needed for the heat pump unit to generate the divided SOP heat, and a shift in general power consumption which is an amount of power consumed by a device outside of the heating system; and generating an operation plan for dividing and causing the generation of the SOP heat such that a peak value of overall power consumption in each of the periods before and after the shut-off period is at or below the permissible peak power, the overall power consumption being a total of the general power consumption, the generation power consumption, and the additional power consumption. In the causing, the generation of the SOP heat is divided between the periods before and after the shut-off period such that a peak value of power consumption in each of the periods before and after the shut-off period is at or below a permissible peak power.

Moreover, the additional power consumption in the period before the shut-off period may be an amount of power consumed by the heat pump unit to increase the temperature of the target to a pre-SOP goal temperature by a start of the shut-off period, the pre-SOP goal temperature being higher than the set temperature. Similarly, the additional power consumption in the period after the shut-off period may be an amount of power consumed by the heat pump unit to increase the temperature of the target at an end of the shut-off period to the set temperature. Furthermore, the causing may include detecting the temperature of the target and an ambient temperature. In the predicting, the shift in the additional power consumption in each of the periods before and after the shut-off period is predicted based on a result of the detecting.

Moreover, in the generating, the pre-SOP goal temperature for a lowest value of the peak values of the overall power consumption throughout each of the periods before and after the shut-off period may be selected from among a plurality of the pre-SOP goal temperatures for the peak values of the overall power consumption in each of the periods before and after the shut-off period that are at or below the permissible peak power.

Moreover, in the generating, the pre-SOP goal temperature for a lowest temperature of the target during the shut-off period that is greater than or equal to a threshold temperature may be selected from among a plurality of the pre-SOP goal temperatures for the peak values of the overall power consumption in each of the periods before and after the shut-off period that are at or below the permissible peak power.

Moreover, in the predicting, a shut-off time may be predicted for each of the plurality of pre-SOP goal temperatures, the shut-off time being a period of time starting when the temperature of the target decreases from the pre-SOP goal temperature and ending when the temperature of the target reaches the threshold temperature. In the causing, the heat pump unit may be caused to generate the SOP heat allotted to the period after the shut-off period at a point in time at which the shut-off time corresponding to the selected pre-SOP goal temperature has elapsed from the start of the shut-off period.

Furthermore, in the generating, the pre-SOP goal temperature which maximizes the shut-off time may be selected from among the plurality of pre-SOP goal temperatures.

Moreover, in the generating, a process for generating the operation plan may be executed upon receiving a signal including information specifying the shut-off period from the power supply source, the signal being received a predetermined amount of time before the start of the shut-off period.

It is to be noted that general or specific embodiments may be realized as a system, method, integrated circuit, computer program, storage media, or any elective combination thereof.

Hereinafter, embodiments of present invention are described with reference to the Drawings.

It is to be noted that each of the embodiments described below shows a specific example of the present invention. The numerical values, shapes, materials, structural elements, the arrangement and connection of the structural elements, steps, the processing order of the steps etc. shown in the following exemplary embodiments are mere examples, and therefore do not limit the present invention. Moreover, among the structural elements in the following exemplary embodiments, structural elements not recited in any one of the independent claims defining the most generic part of the inventive concept are described as arbitrary structural elements.

[Embodiment 1]

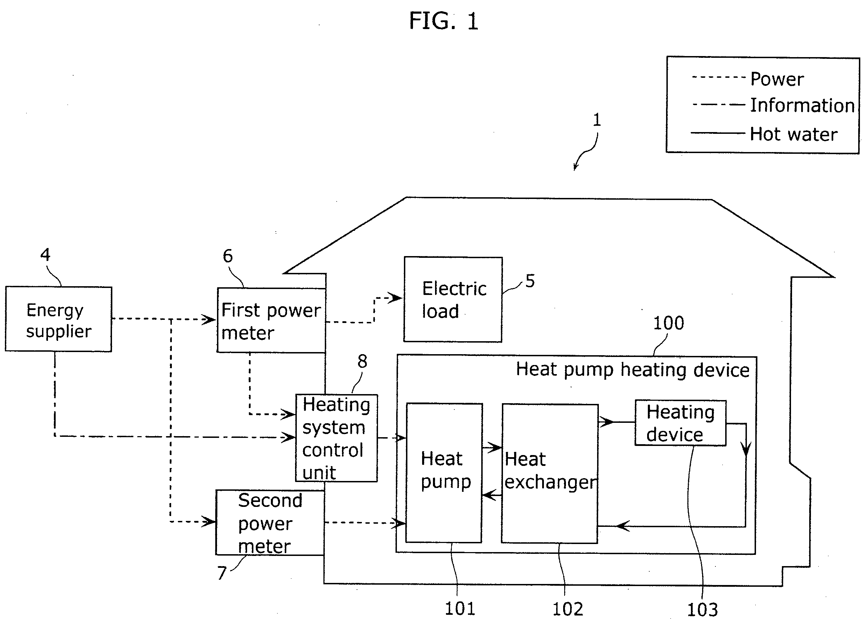

FIG. 1 is a diagram showing a heat pump heating system 1 according to the first embodiment of the present invention. In the example shown in FIG. 1, power is delivered to a home (building) from an energy supplier (power supply source) 4 via a first and second power grid. The first power grid is a network that provides a stable supply of power. Moreover, the first power grid is a power grid having a relatively high electrical utility rate, and the amount of power consumed from the first power grid is measured by a first power meter 6. The second power grid is a power grid from which the energy supplier 4 can stop the supply of power during a given time period. Moreover, the second power grid is a power grid having an electrical utility rate that is lower than that of the first power grid, and the amount of power consumed from the second power grid is measured by a second power meter 7.

Moreover, an electric load 5, a heating system control unit 8, and a heat pump heating device 100 are installed inside the home shown in FIG. 1. The heat pump heating device 100 includes at least a heat pump (heat generation unit) 101, a heat exchanger 102, and a heating device (radiator unit) 103.

The heat pump heating device 100 is a device which, by radiating the heat generated by the heat pump 101 from the heating device 103 using the heat exchanger 102, maintains the temperature of a room in which the heating device 103 is installed to within a predetermined temperature range including a predetermined set temperature. It is to be noted that the predetermined temperature range is, for example, a range in which the greatest value is a pre-SOP goal room temperature (described later) and the lowest value is a threshold temperature (described later).

The first power meter 6 measures the power consumption of electronic devices (that is, an electric load 5) other than the heating system control unit 8 and the heat pump heating device 100. In other words, the heating system control unit 8 and the electric load 5 operate off power supplied from the energy supplier 4 via the first power grid. On the other hand, the second power meter 7 measures the power consumption of components of the heat pump heating device 100 such as the compressor, pump, and fan. In other words, the components of the heat pump heating device 100 operate off power supplied from the energy supplier 4 via the second power grid.

The heating system control unit 8 is functionally capable of communicating with the energy supplier 4 and administering control commands to the heat pump heating device 100. For example, the heating system control unit 8 stops the generation of head by the heat pump heating device 100 during the shut-off period. Furthermore, the heating system control unit 8 causes the heat pump heating device 100 to operate according to an operation plan generated in advance during a time period outside of the shut-off period.

The energy supplier 4 is a company which delivers electricity or gas to individual homes and which can notify each individual home ahead of time with a shut-off signal (hereinafter referred to as a pre-SOP shut-off signal) when the energy supplier 4 wishes to control the use of power by a given home. The notification time of the pre-SOP shut-off signal is, for example, two hours before the energy supplier 4 wishes to control the use of power by a given home.

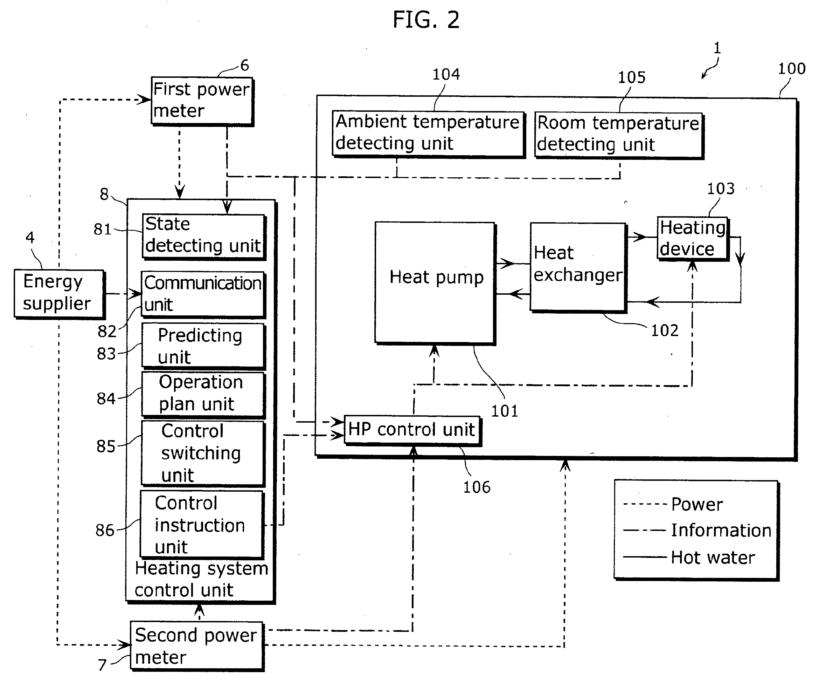

FIG. 2 is a block diagram showing the heat pump heating device 100 and the heating system control unit 8 according to the first embodiment of the present invention in detail.

The heat pump 101 is an air-source heat pump which compresses a refrigerant (such as R410A) into a high temperature-high pressure state. The heat exchanger 102 facilitates heat exchange between the refrigerant transformed into a high temperature-high pressure state by the heat pump 101 and the secondary side of the water cycle (that is, the water cycling between the heat exchanger 102 and the heating device 103).

The heating device 103 is a device for heating the inside of a home, such as a radiator or floor heater which radiates heat energy in a room via a radiator panel, for example. It is to be noted that a specific example of the heating device 103 is not limited to the foregoing, but corresponds to any device having a radiator unit which radiates heat generated by the heat pump 101 to a target.

An ambient temperature detecting unit 104 is installed outside of the room and detects ambient temperature using a thermostat, for instance. A room temperature detecting unit 105 is installed inside the room and detects room temperature using a thermostat, for instance. It is to be noted that the room temperature detecting unit 105 is an example of a temperature detecting unit which measures temperature of a target (in this case, a room), but is not limited thereto. When the heating device 103 is a floor heater, a temperature detecting unit may be used to detect the temperature of the floor (target) in place of the room temperature detecting unit 105.

An HP control unit 106 controls the amount of heat generated by the heat pump 101 and controls the amount of heat radiated by the heating device 103, such that the temperature of the room in which the heating device 103 is installed is maintained within a predetermined range including the set temperature. It is to be noted that in a normal operating state (that is, in a state in which the pre-SOP shut-off signal is not being received), the HP control unit 106 controls operation of the heat pump 101 and the heating device 103 according to operation conditions set by a user, for example. On the other hand, the HP control unit 106 controls operation of the heat pump 101 and the heating device 103 in accordance with instructions from the heating system control unit 8 in the periods before and after the shut-off period.

The heating system control unit 8 is configured from a state detecting unit 81, a communication unit 82, a predicting unit 83, an operation plan unit 84, a control switching unit 85, and a control instruction unit 86. It is to be noted that in the first embodiment, the heating system control unit 8 is configured to be structurally separate from the heat pump heating device 100. However, a configuration in which the heat pump heating device 100 and the heating system control unit 8 are combined, such as a configuration in which the heating system control unit 8 is placed where in the HP control unit 106 is, is also acceptable.

The state detecting unit 81, ambient temperature detecting unit 104, and the room temperature detecting unit 105 detect (collect) various information such as power consumption amount measured by the first power meter 6 and the second power meter 7, and the amount of heat radiated in each room by the heating device 103, from various detected signals.

The communication unit 82 receives pre-SOP shut-off signals and ON signals from the energy supplier 4, and has a function to notify the energy supplier 4 of the stopping and restarting of the delivery of power to the heat pump heating device 100 via the second power grid. The pre-SOP shut-off signal received by the communication unit 82 is a signal which stops the delivery of power via the second power grid after a predetermined period of time has elapsed.

The pre-SOP shut-off signal includes information which specifies the shut-off period which is a time period during which the delivery of power via at least the second power grid is stopped. For example, the shut-off period used in the examples described hereinafter is a period of one hour lasting from 18:00 to 19:00. The pre-SOP shut-off signal may further include information indicating the permissible peak power for the periods before and after the shut-off period. For example, the permissible peak power used in the examples described hereinafter is 4.5 kW.

The predicting unit 83 includes an algorithm for predicting a shift in the amount of heat needed for heating during the shut-off period, a shift in the power consumption during the periods before and after the shut-off period, and a shift in the amount of decrease in room temperature during the shut-off period, based on information detected by the state detecting unit 81 such as the ambient temperature, room temperature, heater temperature, and power consumption. The predicting method will be described in detail later.

The operation plan unit 84 generates an operation plan for the operation of the heat pump heating device 100 during the periods before and after the shut-off period. The operation plan is generated, for example, at a point in time at which the pre-SOP shut-off signal is received by the communication unit 82 from the energy supplier 4, and is based on the predicted values from the predicting unit 83.

When the control switching unit 85 does not receive the pre-SOP shut-off signal from the communication unit 82 or the energy supplier 4, internal control by the HP control unit 106 inside the heat pump heating device 100 is given priority. However, when the pre-SOP shut-off signal is received, the HP control unit 106 is forced to control each of the foregoing components according to the operation plan generated by the operation plan unit 84 and received by the control instruction unit 86.

The control instruction unit 86 sends the operation plan generated by the operation plan unit 84 to the HP control unit 106 included in the heat pump heating device 100.

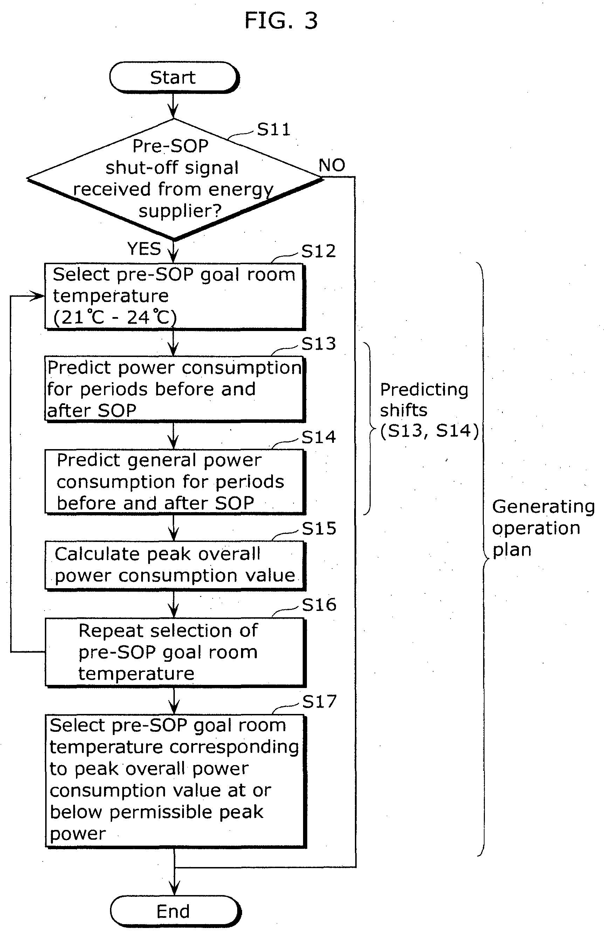

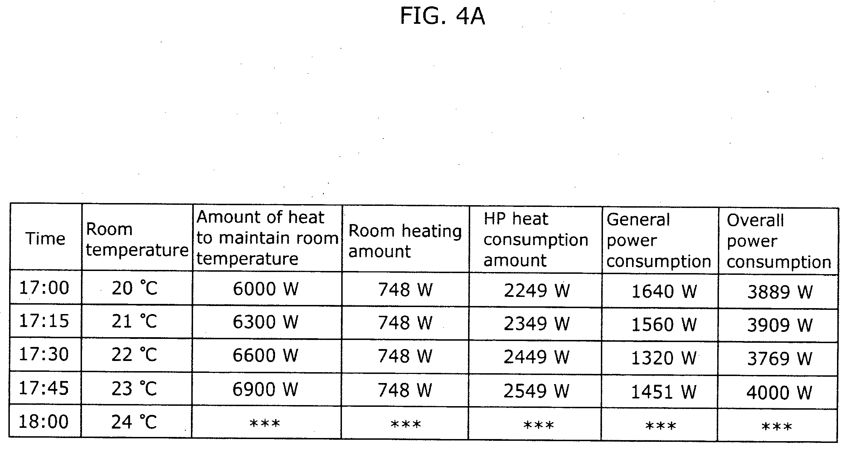

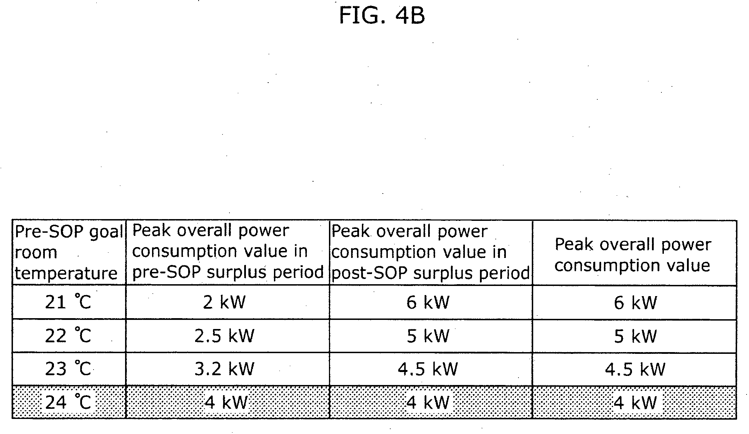

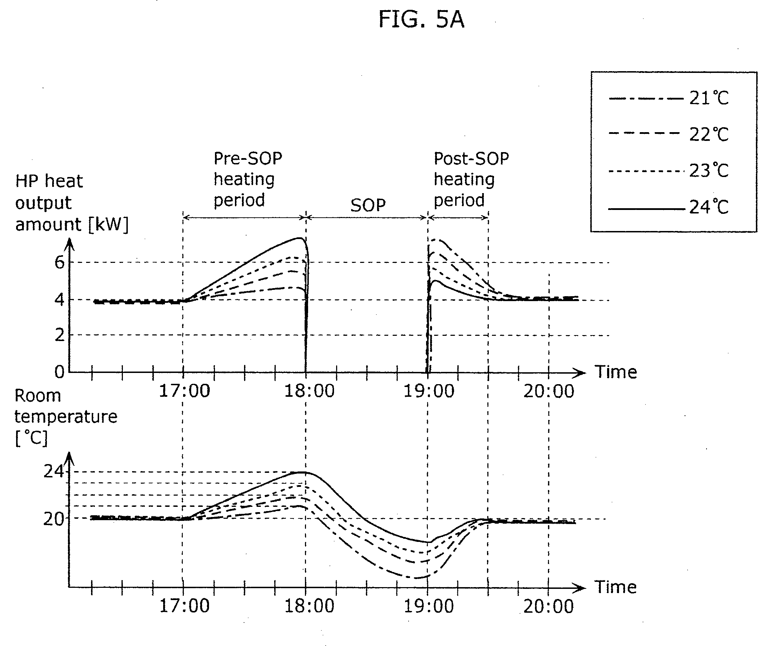

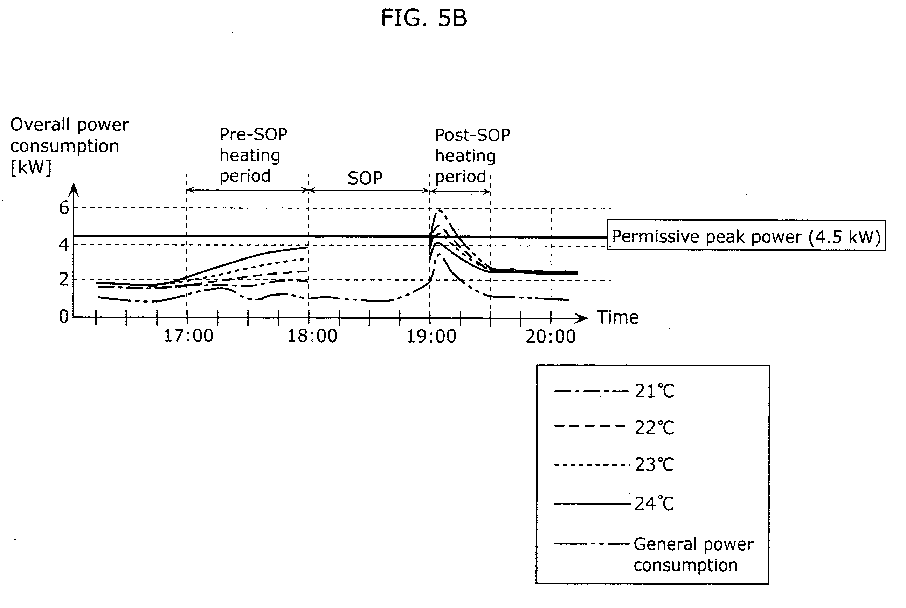

Next, operations of the heating system control unit 8 according to the first embodiment will be explained with reference to FIG. 3 through FIG. 5B. FIG. 3 is a flow chart illustrating the processes involved in the generation of the operation plan for the heat pump heating device 100 by the operation plan unit 84 and the predicting unit 83. FIG. 4A is a table showing a power consumption prediction result when the pre-SOP goal room temperature is 24 degrees Celsius. FIG. 4B is a table showing a calculation result of the peak overall power consumption value for each of the pre-SOP goal room temperatures. FIG. 5A is a graph showing shifts in HP heat output and room temperature for each of the pre-SOP goal room temperatures predicted by the predicting unit 83. FIG. 5B is a graph showing shifts in power consumption for each of the pre-SOP goal room temperatures predicted by the predicting unit 83.

The operation plan generated here is an operation plan for generating additional heat in the heat pump 101 during the periods before and after the shut-off period (hereinafter represented as pre-SOP heating period and post-SOP heating period). Here, the additional heat is heat required to be radiated during the shut-off period by the heating device 103 in order to maintain the temperature of the room at the set temperature (hereinafter represented as SOP (shut-off period) heat). More specifically, the operation plan unit 84 generates an operation plan for dividing up the generation of and generating the SOP heat in the pre-SOP heating period and the post-SOP heating period such that the peak power consumption values in the pre-SOP heating period and the post-SOP heating period are each at or below the permissible peak power.

The operation plan unit 84 begins generating the operation plan at a point in time at which the communication unit 82 receives the pre-SOP shut-off signal from the energy supplier 4 (YES in S11). However, the timing of the operation plan generation is not limited to this, and for example may be generated at a predetermined point in time (for example, midnight). In this case, however, knowledge of the shut-off period for that day is required.

First, the operation plan unit 84 selects the pre-SOP goal room temperature (pre-SOP goal temperature) (S12). The pre-SOP goal room temperature is the temperature of the room at the start of the shut-off period. In the example shown in FIG. 3, in one degree increments, a range from 21 to 24 degrees Celsius is selected.

Next, the predicting unit 83 predicts a shift power consumption of the heat pump 101 (hereinafter represented as HP power consumption) during each of the pre-SOP heating period and the post-SOP heating period based on the ambient temperature and the room temperature information detected by the state detecting unit 81 (S13). This predicted value depends on, for example, the efficiency of the heat pump (the rated capacity, COP), the efficiency of the heating device 103, and the thermal efficiency of the home (heat radiation loss, for example).

It is to be noted that the HP power consumption predicted in step S13 is a change over time, during the pre-SOP heating period and the post-SOP heating period, in the sum total value of generation power consumption which is power consumed by the heat pump 101 to maintain the set temperature of the room (power needed to generate an amount of heat corresponding to the heat needed to maintain room temperature shown in FIG. 4A) and additional power consumption which is power needed for the heat pump 101 to generate the divided SOP heat (power needed to generate an amount of heat which corresponds to the room heating amount shown in FIG. 4A).

Furthermore, the predicting unit 83 predicts a shift in the general power consumption (S14). It is to be noted that the general power consumption predicted in step S14 is a change over time in the power consumed by electronic devices other than the heat pump heating device 100 (the electric load 5 in the example shown in FIG. 1).

Lastly, the operation plan unit 84 calculates the peak overall power consumption value for each of the pre-SOP heating period and the post-SOP heating period based on the predicted values (S15). It is to be noted that the overall power consumption calculated in step S15 is a change over time in the sum total value of the generation power consumption, the additional power consumption, and the general power consumption predicted in steps S13 through S14.

Next, a specific example explaining the method of predicting the shift in overall power consumption during the pre-SOP heating period when the pre-SOP goal room temperature is 24 degrees Celsius will be given with reference to FIG. 4A. FIG. 4A shows changes in the variables time, room temperature (degrees Celsius), heat needed to maintain room temperature (W), room heating amount (W), HP power consumption (W), general power consumption (W), and overall power consumption (W).

Here, each of the predicted values shown in FIG. 4A are influenced by room cubic capacity, room surface area, room air specific heat, room thermal insulation efficiency, ambient temperature, and HP efficiency (coefficient of performance). The example shown in FIG. 4A is a prediction result when the room cubic capacity is 500 $m^3$, the room surface area is 600 $m^2$, the air specific heat is 0.34 Wh / degrees Celsius $m^3$, the room thermal insulation efficiency is 0.5 W / degrees Celsius $m^2$, the ambient temperature is 0 degrees Celsius, and the HP coefficient of performance (COP) is 3.

In FIG. 4A, the set temperature for the room at 17:00 is 20 degrees Celsius. The set temperature of the heat pump heating device 100 is such that the temperature of the room is 20 degrees Celsius outside of the pre-SOP heating period, shut-off period, and the post-SOP heating period. From 17:00, the room temperature gradually begins to rise. Fifteen minutes later at 17:15 the room temperature rises to 21 degrees Celsius. Similarly, at 17:30 the room temperature is 22 degrees Celsius, 23 degrees Celsius at 17:45, and 24 degrees Celsius at 18:00, which is the pre-SOP goal temperature. That is, FIG. 4A shows an example in which the room temperature rises from the set temperature of 20 degrees Celsius to the pre-SOP goal room temperature of 24 degrees Celsius in a period of one hour from 17:00 to 18:00 (the pre-SOP heating period) at a rate of 1 degree Celsius every 15 minutes.

The amount of heat needed to raise the room temperature from 20 degrees to 21 degrees Celsius in a span of 15 minutes from 17:00 to 17:15 is the sum of the heat needed to maintain room temperature and the room heating amount, where the heat needed to maintain room temperature is the power consumed in order to maintain the room temperature of 20 degrees Celsius, and the room heating amount is the power needed in order to increase the room temperature by 1 degree Celsius.

Here, heat needed to maintain room temperature can be calculated using Equation 1, and room heating amount can be calculated using Equation 2. That is, the amount of heat radiated from the heating device 103 in the fifteen minutes between 17:00 and 17:15 is 600 (Equation 1) + 748 (Equation 2) = 6748 W.

$$\text{(Equation 1) heat needed to maintain room temperature} = \text{(room temperature - ambient temperature)} \times \text{thermal insulation efficiency} \times \text{room surface area}$$

$$\text{(Equation 2) room heating amount} = \text{change in temperature} \times \text{air specific heat} \times \text{room cubic capacity / heating time}$$

Moreover, the HP power consumption, which is the power consumed by the heat pump 101 in order to generate the room heating amount and the heat needed to maintain room temperature, can be calculated with Equation 3. That is, the HP power consumption in the fifteen minutes between 17:00 and 17:15 is 2249 W.

$$\text{(Equation 3) HP power consumption} = \text{(room heating amount + heat needed to maintain room temperature) / COP}$$

Furthermore, the general power consumption, which is the power consumed by, for example, home electronics (electric load 5) in the fifteen minutes between 17:00 and 17:15, is 1640 W. Thus, the overall power consumption in the fifteen minutes between 17:00 and 17:15 is 2249 + 1640 = 3889 W.

It is to be noted that the prediction method for the general power consumption is not particularly limited. For example, it is acceptable to predict the general power consumption based on past actual power consumption performance. For example, the power consumption measured by the first power meter 6 can be collected by the state detecting unit 81 on a regular basis and stored. It is then acceptable to use a predicted value that is the average of actual power consumption performances from the past in the same day of the week and time of day as the target time period for prediction (for example, 3 values taken from 1 week ago, 2 weeks ago, and 3 weeks ago).

The overall power consumption in the fifteen minutes between 17:15 and 17:30 is 3909 W, 3769 W in the fifteen minutes between 17:30 and 17:45, and 4000 W in the fifteen minutes between 17:45 and 18:00. Next, as shown in FIG. 4A, the peak overall power consumption value in the pre-SOP heating period between 17:00 and 18:00 is 4000 W (4 kW).

Similarly, the shift in overall power consumption in the post-SOP heating period can be calculated. It is to be noted that here, HP power consumption is the power consumed by the heat pump 101 in order to generate an amount of heat equivalent to the sum of the heat needed to maintain room temperature which is the power consumed in order to maintain the room temperature at the end of the shut-off period, and the room heating amount which is the power needed in order to increase the room temperature to the set temperature.

For example, when the room temperature at the end of the shut-off period is 18 degrees Celsius and the room temperature is raised for 30 minutes until the set temperature of 20 degrees Celsius is reached at a rate of 1 degree Celsius per fifteen minutes, the operation plan unit 84 calculates the heat needed to maintain room temperature and the room heating amount for each 15 minute period using Equation 1 and Equation 2, and uses the calculated values to find the peak overall power consumption value.

It is to be noted that in the foregoing example, the pre-SOP heating period is one hour, and the post-SOP heating period is 30 minutes, but the time can be changed voluntarily. It is also to be noted that as the length of time increases, the peaks in power consumption decrease, but radiant heat loss increases leading to an increased power consumption load. On the other hand, as the length in time decreases, radiant heat loss decreases, but peaks in power consumption increase. Furthermore, when the length of time is too short, the change in temperature becomes drastic, compromising user comfort.

For that reason, the length of the heating periods may be changed according to the change in temperature. That is, the pre-SOP heating period can be set longer for higher pre-SOP goal room temperatures, and the post-SOP heating period can be set longer for greater differences between the room temperature predicted value at the end of the shut-off period and the set temperature. As a result, the comfort of the user is not compromised, and an increase in the peaks in power consumption can be avoided.

Next, for each of the selected pre-SOP goal room temperatures, the operation plan unit 84 saves the peak overall power consumption value calculated in step S15, and repeats the sequence of actions in steps S12 through S15 (S16). The result is a chart of the peak overall power consumption value for each of the pre-SOP goal room temperatures, such as the one shown in FIG. 4B. It is to be noted that shown in the peak overall power consumption value column on the right are the peak overall power consumption values throughout both the pre-SOP heating period and the post-SOP heating period.

Lastly, the operation plan unit 84 selects the pre-SOP goal room temperatures for the peak overall power consumption values that are at or below the permissible peak power (S17). For example, if the permissible peak power is 4.5 kW, the selected pre-SOP goal room temperatures among those shown in FIG. 4B would be 23 degrees and 24 degrees Celsius, because the corresponding peak overall power consumption values are at or below the permissible peak power. Next, the operation plan unit 84 according to the first embodiment selects 24 degrees Celsius which corresponds to the lowest of the peak overall power consumption values.

Next, the control instruction unit 86 notifies the HP control unit 106 of the operation plan (for example, the chart in FIG. 4A corresponds to the operation plan for the pre-SOP heating period) for the pre-SOP heating period and the post-SOP heating period generated by the operation plan unit 84. The HP control unit 106 then controls operation of the heat pump 101 according to the received operation plan.

Specifically, the HP control unit 106 controls operation of the heat pump 101 and the heating device 103 such that the temperature of the room in which the heating device 103 is installed rises by 4 degrees Celsius at a rate of one degree every 15 minutes for one hour between 17:00 and 18:00, which is the pre-SOP heating period. In other words, the temperature is raised from the set temperature of 20 degrees Celsius to the pre-SOP goal room temperature of 24 degrees Celsius in this span of one hour. Similarly, the HP control unit 106 controls operation of the heat pump 101 and the heating device 103 such that the temperature of the room in which the heating device 103 is installed rises by 2 degrees Celsius at a rate of one degree every 15 minutes for 30 minutes between 19:00 and 19:30, which is the post-SOP heating period. In other words, the room temperature at the end of the shut-off period of 18 degrees Celsius is brought back up to the set temperature of 20 degrees Celsius in this span of 30 minutes.

As a result of the operation control described above, shifts in the HP heat output, room temperature, and overall power consumption are predicted as shown in FIG. 5A and FIG. 5B. However, there is a possibility that the actual result will not match this prediction result exactly. Specifically, the HP heat output, room temperature, and overall power consumption monotonically increase such that the room temperature at the end of the pre-SOP heating period reaches the pre-SOP goal room temperature. Next, in the shut-off period (represented as SOP in the Drawings), the HP heat output is 0 (that is, the heat pump 101 is stopped), the room temperature monotonically decreases, and the power consumption becomes simply general power consumption. Then, the HP heat output, room temperature, and overall power consumption monotonically increase such that the room temperature at the end of the post-SOP heating period reaches the pre-SOP goal room temperature.

No matter which is chosen, each of the pre-SOP goal room temperatures show the same trend in HP heat output, room temperature, and overall power consumption shifts, but as is shown in FIG. 5A and FIG. 5B, the higher the pre-SOP goal room temperature is, the higher the temperature to be increased in the pre-SOP heating period becomes, the higher the HP heat output becomes, and the higher the HP power consumption becomes. On the other hand, operation of the heat pump 101 stops during the shut-off period and heat ceases to radiate from the heating device 103, thereby causing the room temperature to decrease. Moreover, the room temperature at the end of the shut-off period increases for higher ones of the pre-SOP goal room temperatures. Consequently, the higher the pre-SOP goal room temperature, the lower the HP heat output and the HP power consumption for bringing back up the temperature of the room to the set temperature in the post-SOP heating period are.

Thus, according to the first embodiment, SOP heat required to be radiated from the heating device 103 during the shut-off period to maintain the set temperature of the room can be suitably divided and generated in the pre-SOP heating period and the post-SOP heating period by predicting a shift in overall power consumption for each pre-SOP goal room temperature. As a result, the peak overall power consumption values in the periods before and after the shut-off period can be equalized at or below the permissible peak power.

[Embodiment 2]

The configuration of the heat pump heating system 1 according to the second embodiment is the same as the first embodiment, and as such explanation thereof will be omitted. The explanation will therefore focus on the points of difference, and details regarding common points with the first embodiment will also be omitted.

According to the first embodiment, a shift in overall power consumption is predicted for each pre-SOP goal room temperature, and the pre-SOP goal room temperatures for the peak overall power consumption values which are at or below the permissible peak power are selected. However, depending on the thermal efficiency of the home, the room temperature can drastically decrease due to the dissipation of heat during the shut-off period, causing the comfort of the user of the heat pump heating device 100 to be compromised.

With this in mind, according to the second embodiment, an approach is taken to keep the peak overall power consumption value at or below the permissible peak power while also maintaining a room temperature which does not compromise the comfort of the user of the heat pump heating device 100, by further predicting a shift in the amount of decrease in room temperature during the shut-off period.

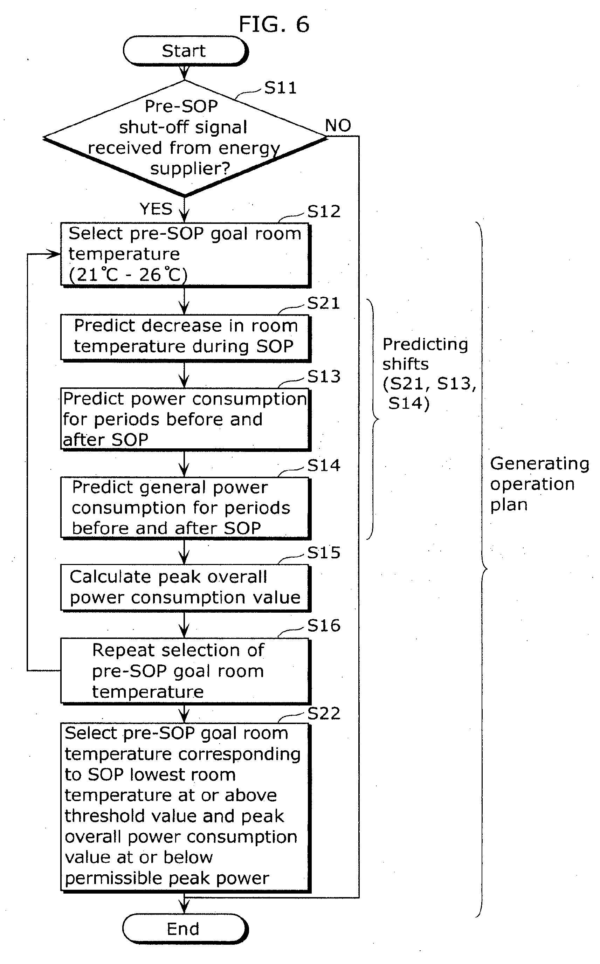

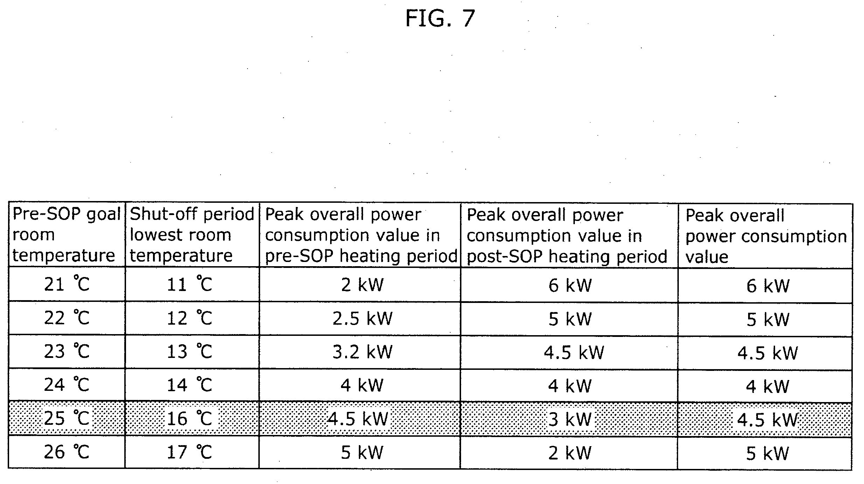

Next, operations of the heating system control unit 8 according to the second embodiment will be explained with reference to FIG. 6 and FIG. 7. FIG. 6 is a flow chart illustrating the processes involved in the generation of the operation plan for the heat pump heating device 100 by the operation plan unit 84 and the predicting unit 83 according to the second embodiment of the present invention. FIG. 7 is a table showing a calculation result of the peak overall power consumption value for each of the pre-SOP goal room temperatures.

The points of difference from the flow chat shown in FIG. 3 according to the first embodiment are that the lowest room temperature is at or above the permissible room temperature after a shift in the amount of decrease in room temperature during the shut-off period is predicted based on the ambient temperature and the room temperature information, and that the pre-SOP goal room temperatures for the peak overall power consumption values that are at or below the permissible peak power are selected. The steps S12, S13, S14, S15, and S16 in FIG. 6 perform the same functions as in the first embodiment (FIG.3).

In step S21 in FIG. 6, the predicting unit 83 predicts the amount of decrease in room temperature during the shut-off period, and saves the lowest room temperature (usually the room temperature at the end of the shut-off period) for each of the pre-SOP goal room temperatures, as is shown in FIG. 7. Next, in step S22, the operation plan unit 84 selects the pre-SOP goal room temperatures for the shut-off period lowest room temperatures that are at or above a threshold value (permissible room temperature) from among the plurality of pre-SOP goal room temperatures for the peak overall power consumption values that are at or below the permissible peak power.

For example, when the permissible room temperature is 16 degrees Celsius and the permissible peak power is 4.5 kW, the operation plan unit 84 selects, from among the plurality of pre-SOP goal room temperatures for the peak overall power consumption values that are at or below the permissible peak power (23, 24, and 25 degrees Celsius), the temperature of 25 degrees Celsius which corresponds to the shut-off period lowest room temperature that is at or above the permissible room temperature, as is shown in FIG. 7.

It is to be noted that when there is a plurality of pre-SOP goal room temperatures which meet the permissible peak power condition and whose shut-off period lowest room temperatures are at or above the permissible room temperature, the pre-SOP goal room temperature for the lowest of the peak overall power consumption values among them may be selected.

In this way, according to the second embodiment, by predicting a shift in overall power consumption and in the amount of decrease in room temperature for each pre-SOP goal room temperature, selection of a pre-SOP goal room temperature can be made whereby the peak power consumption value will not exceed the permissible peak power, and whereby room temperature will not drop to or below the permissible room temperature. As a result, the peak overall power consumption values in the periods before and after the shut-off period can be equalized at or below the permissible peak power while also maintaining a room temperature which does not compromise the comfort of the user of the heat pump heating device 100.

[Embodiment 3]

The configuration of the heat pump heating system 1 according to the third embodiment is the same as the first embodiment, and as such explanation thereof will be omitted. The explanation will therefore focus on the points of difference, and details regarding common points with the first and second embodiments will also be omitted.

The second embodiment focuses on the amount of decrease in room temperature during the shut-off period, wherein a pre-SOP goal room temperature is selected which will keep the room temperature from dropping below the permissible room temperature and keep the peak power consumption value to a minimum. However, from the viewpoint of equalization of the overall power consumption, optimum control is not necessarily achieved in every case.

For that reason, with the third embodiment, a shift in the amount of decrease in room temperature during the shut-off period is predicted for each pre-SOP goal room temperature, and after determining a shut-off time which will not compromise the comfort of the user of the heat pump heating device 100, the peak overall power consumption values are compared.

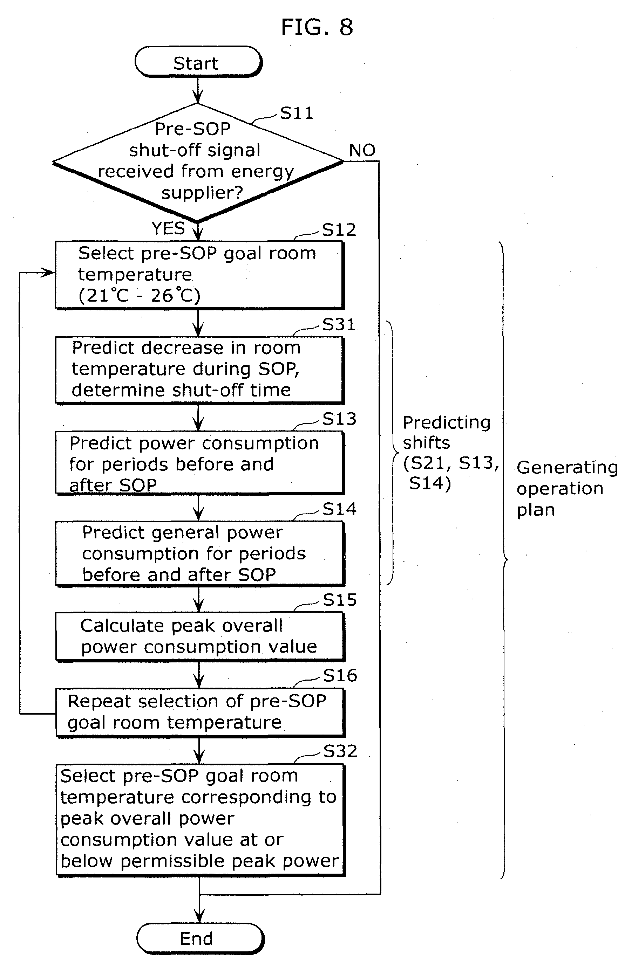

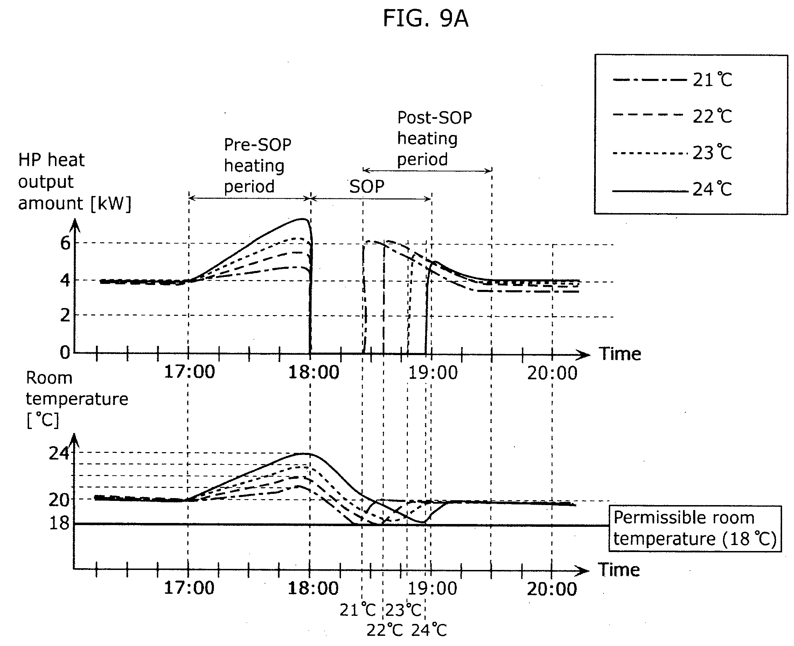

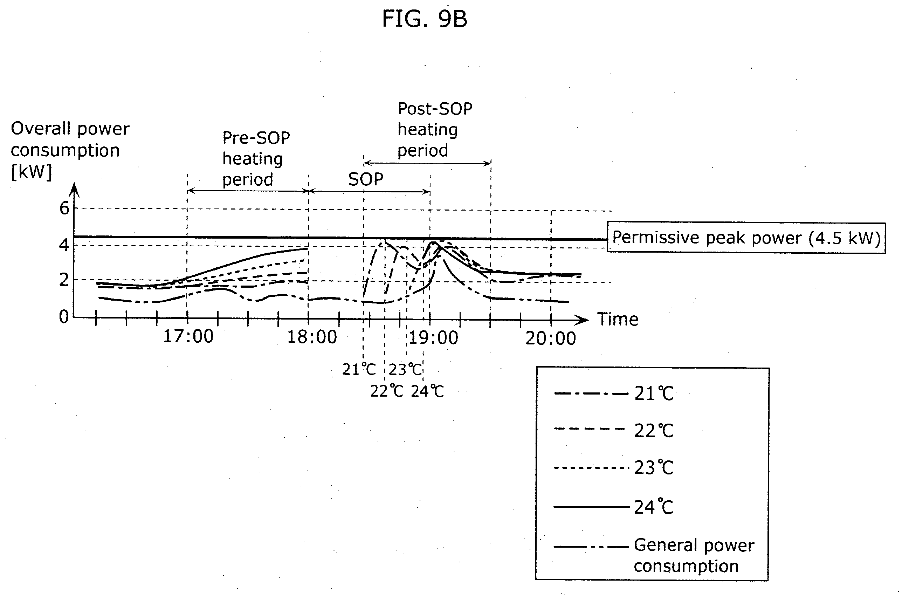

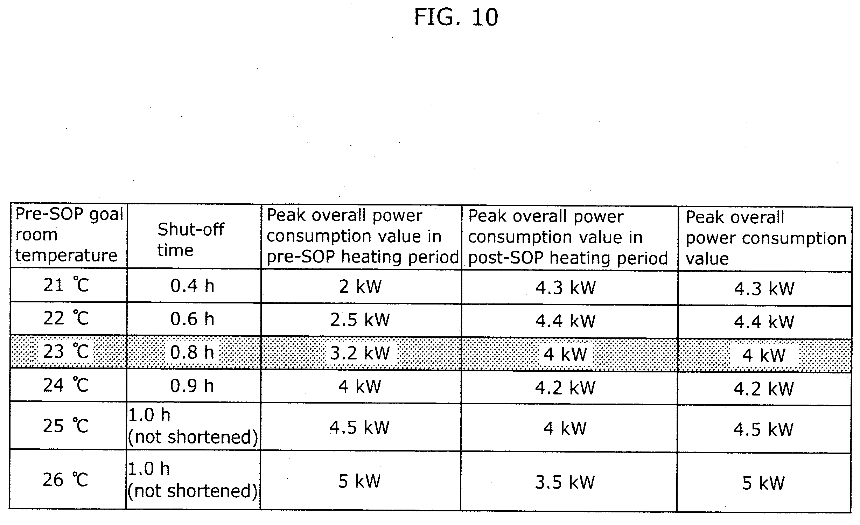

Next, operations of the heating system control unit 8 according to the third embodiment will be explained with reference to FIG. 8 through FIG. 10. FIG. 8 is a flow chart illustrating the processes involved in the generation of the operation plan for the heat pump heating device 100 by the operation plan unit 84 and the predicting unit 83 according to the third embodiment of the present invention. FIG. 9A is a graph showing shifts in HP heat output and room temperature for each of the pre-SOP goal room temperatures predicted by the predicting unit 83. FIG. 9B is a graph showing shifts in power consumption for each of the pre-SOP goal room temperatures predicted by the predicting unit 83. FIG. 10 is a table showing calculation results of the peak overall power consumption value for each of the pre-SOP goal room temperatures.

The point of difference from the flow chart shown in FIG. 3 according to the first embodiment the addition of a process in which a shift in the decrease in room temperature during the shut-off period using the ambient temperature and the room temperature information is predicted and a shut-off time is determined. The steps S12, S13, S14, S15, and S16 in FIG. 8 perform the same functions as in the first embodiment (FIG.3).

The heat pump heating system according to the third embodiment can restart the supply of power to the heat pump 101 before the end of the shut-off period indicated in the pre-SOP shut-off signal. However, before the original end time of the shut-off period, the heat pump 101 operates off of a supply of power received via the first power grid from the energy supplier 4.

Specifically, in step S31, the predicting unit 83 predicts a shift in the amount of decrease in room temperature during the shut-off period and determines a shut-off time. Here, the shut-off time is a period of time beginning when the room temperature decreases from the pre-SOP goal temperature and ending when the room temperature reaches the threshold temperature (permissible room temperature). In other words, it is a time period during which the supply of power to the heat pump 101 is truly cut off.

Moreover, in step S32, with consideration of the shut-off time, the operation plan unit 84 selects a pre-SOP goal temperature from among the plurality of pre-SOP goal temperatures for the peak overall power consumption values that are at or below the permissible peak power.

As is shown in FIG. 9A and FIG. 9B, the higher the pre-SOP goal room temperature, the greater the overall power consumption in the pre-SOP heating period increases, but the amount of time it takes for the room temperature to reach the permissible room temperature also increases. In other words, the degree that the shut-off period can be shortened decreases. On the other hand, the lower the pre-SOP goal room temperature, the lesser the overall power consumption in the pre-SOP heating period is, but the amount of time it takes for the room temperature to reach the permissible room temperature becomes shorter. In other words, the shut-off period can be shortened to a greater degree.

For this reason, the operation plan unit 84 may determine the pre-SOP goal room temperature upon consideration of the balance between the peak overall power consumption value and the breadth of the shut-off period. For example, when the permissible room temperature is 18 degrees Celsius and the permissible peak power is 4.5 kW, the operation plan unit 84 may select, from among the plurality of pre-SOP goal room temperatures for the peak overall power consumption values that are at or below the permissible peak power (21, 22, 23, 24, 25, and 26 degrees Celsius), the temperature of 23 degrees Celsius which corresponds to the lowest of the peak overall power consumption values, as is shown in FIG. 10. However, the selection method of the pre-SOP goal room temperature is not limited to this method. For instance, the operation plan unit 84 may select, from among the plurality of pre-SOP goal room temperatures which meet the permissible peak power condition, the temperature of 25 degrees Celsius which maximizes the shut-off time.

When the operation plan unit 84 selects 23 degrees Celsius, the heating system control unit 8 causes the heat pump 101 to restart generating heat before the end of the shut-off period as originally specified by the energy supplier 4. Specifically, the heating system control unit 8 causes the heat pump 101 to generate the SOP heat allotted to the post-SOP heating period at a point in time at which the shut-off time corresponding to the selected pre-SOP goal temperature has elapsed from the start of the shut-off period. That is, according to the third embodiment, the point in time at which the shut-off period ends and the point in time at which the post-SOP heating period starts and ends varies depending on the pre-SOP goal room temperature selected, as is shown in FIG. 9A and FIG. 9B.

As such, with the third embodiment, by predicting a shift in the overall power consumption and the amount of decrease in room temperature for each of the pre-SOP goal room temperatures, and by further predicting a shut-off time such that room temperature will not drop to or below the permissible room temperature, the peak overall power consumption values in the periods before and after the shut-off period can be equalized at or below the permissible peak power while also maintaining a room temperature which does not compromise the comfort of the user of the heat pump heating device 100

While the permissible peak power was set as notified by the energy supplier 4 in the first, second, and third embodiments, it is also acceptable to set the permissible peak power with the method described below. For example, the permissible peak power may be stored and set in the heating system control unit 8 by the user for each individual home.

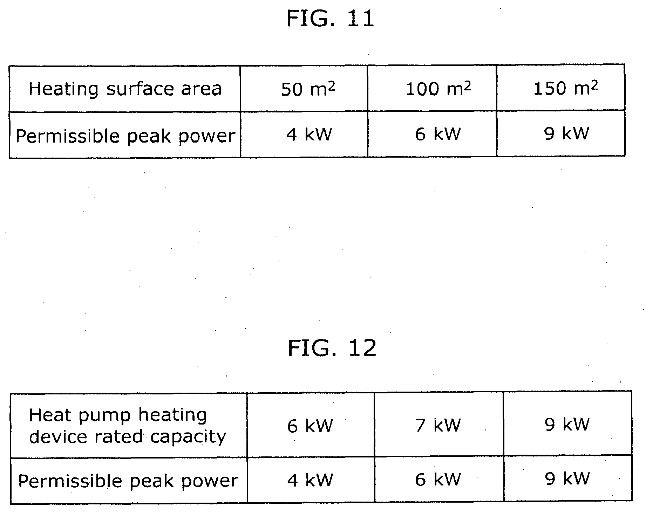

FIG. 11 shows the correlation of the heating surface area and the permissible peak power. If the heating surface area is a room that is 50 $m^2$, the permissible peak power is set to 4 kW. In this way, the permissible peak power may be set according to the flooring surface area to which heat is supplied.

FIG. 12 shows the correlation of the rated capacity of the heat pump heating device and the permissible peak power. If the rated capacity is 6 kW, then the permissible peak power is set to 4 kW. In this way, the permissible peak power may be set according to the rated capacity of the heat pump heating device 100.

Moreover, the energy supplier 4 may include with the pre-SOP shut-off signal and send a chart of the permissible peak powers corresponding to the flooring surface area to the heating system control unit 8, such as the one shown in FIG. 11. The heating system control unit 8 may then obtain the flooring surface area of the room in which the heating device 103 is installed and select the permissible peak power corresponding to the flooring surface area obtained from the chart included in the pre-SOP shut-off signal.

Moreover, the energy supplier 4 may include with the pre-SOP shut-off signal and send a chart of the permissible peak powers corresponding to the rated capacity to the heating system control unit 8, such as the one shown in FIG. 12. The heating system control unit 8 may then obtain the rated capacity of the heat pump heating device 100 and select the permissible peak power corresponding to the rated capacity obtained from the chart included in the pre-SOP shut-off signal.

Moreover, the user of the heat pump heating device 100 may predict a suitable permissible peak power based on the ambient temperature and current room temperature information at the point in time the shut-off signal or the pre-SOP shut-off signal is received and set the permissible peak power in the heating system control unit 8. With this, a suitable permissible peak power can be set based on environment information such as the ambient temperature and room temperature information at the point in time the shut-off period starts. As a result, equalization of power consumption to within the range of the permissible room temperature in which comfort levels are maintained can be achieved.

In the first, second, and third embodiments, the permissible peak power is handled as a fixed value in relation to a temporal period, that is, in relation to the pre-SOP heating period and the post-SOP heating period. However, the permissible peak power may vary temporally, as described below. For example, the permissible peak power for the post-SOP heating period may be set individually so as to be lower than the permissible peak power for the pre-SOP heating period. This is because, upon consideration of the home-wide electrical needs and prediction margin of error for heating load, there is a high probability that the prediction margin of error for the predicted value of the overall power consumption occurring in the post-SOP heating period will be greater than the prediction margin of error for the predicted value of the overall power consumption occurring in the pre-SOP heating period. For this reason, is it possible to reduce an increase in the peak power arising from a difference in the peak power predicted value and the actual value by estimating the permissible peak power for the post-SOP heating period on the low side.

It should be noted that although the present invention was described based on the previous embodiments, the present invention is not limited to these embodiments. The following examples are also intended to be included within the scope of the present invention.

Each of the preceding devices is, specifically, a computer system configured from a microprocessor, ROM, RAM, a hard disk unit, a display unit, a keyboard, and a mouse, for example. A computer program is stored in the RAM or the hard disk unit. Each of the devices achieves its function as a result of the microprocessor operating according to the computer program. Here, the computer program is configured of a plurality of pieced together instruction codes indicating a command to the computer in order to achieve a given function.

A portion or all of the components of each of the preceding devices may be configured from one system LSI (Large Scale Integration). A system LSI is a super-multifunction LSI manufactured with a plurality of components integrated on a single chip, and is specifically a computer system configured of a microprocessor, ROM, and RAM, for example. A computer program is stored in the RAM. The system LSI achieves its function as a result of the microprocessor operating according to the computer program.

A portion or all of the components of each of the preceding devices may each be configured from a detachable IC card or a stand-alone module. The IC card and the module are computer systems configured from a microprocessor, ROM, and RAM, for example. The IC card and the module may include the super-multifunction LSI described above. The IC card and the module achieve their function as a result of the microprocessor operating according to a computer program. The IC card and the module may be tamperproof.

The present invention may be a method shown above. Moreover, the present invention may also be a computer program realizing these methods with a computer, or a digital signal of the computer program.

Moreover, the present invention may also be realized as the computer program or the digital signal stored on storage media readable by a computer, such as a flexible disk, hard disk, CD-ROM, MO, DVD, DVD-ROM, DVD-RAM, DVD-RAM, BD (Blu-ray Disc), or a semiconductor memory. The present invention may also be the digital signal stored on the above mentioned storage media.

Moreover, the present invention may also be realized by transmitting the computer program or the digital signal, for example, via an electric communication line, a wireless or wired line, a network such as the Internet, or data broadcasting.

Moreover, the present invention may be a computer system including memory storing the computer program and a microprocessor operating according to the computer program.

Moreover, the computer program or the digital signal may be implemented by an independent computer system by being stored on the storage media and transmitted, or sent via the network, for example.

The preceding embodiments and the preceding transformation examples may be individually combined.

[Industrial Applicability]

The heat pump heating system and method of controlling the heat pump heating system according to the present invention is useful as a heating system which contributes to the stabilization of grid power.

[Reference Signs List]

| | |
|---|---|
| 1 | heat pump heating system |
| 4 | energy supplier |
| 5 | electric load |
| 6 | first power meter |
| 7 | second power meter |
| 8 | heating system control unit |
| 81 | state detecting unit |
| 82 | communication unit |
| 83 | predicting unit |
| 84 | operation plan unit |
| 85 | control switching unit |
| 86 | control instruction unit |
| 100 | heat pump heating device |
| 101 | heat pump |
| 102 | heat exchanger |
| 103 | heating device |
| 104 | ambient temperature detecting unit |
| 105 | room temperature detecting unit |
| 106 | HP control unit |

**Claims**

1. A heating system (1) which receives power from a power supply source (4) and maintains a temperature of a target to within a predetermined temperature range including a predetermined set temperature, the heating system comprising:

   a heat pump unit (101) configured to generate heat using power supplied from the power supply source;
   a radiator unit (103) configured to radiate the heat generated by the heat pump unit to the target; and
   a heating system control unit (8) configured to cause the heat pump unit to stop generating the heat during a predetermined shut-off period, **characterised in that** the heating system control unit causes the heat pump unit to generate additional heat as shut-off period (SOP) heat in periods before and after the shut-off period, the SOP heat being an amount of heat required to be radiated during the shut-off period by the radiator unit to maintain the set temperature of the target,
   wherein the heating system control unit is configured to cause the generation of the SOP heat to be divided between the periods before and after the shut-off period such that a peak value of power consumption in each of the periods before and after the shut-off period is at or below a permissible peak power.

2. The heating system according to Claim 1,
   wherein the heating system control unit (8) further includes:

   a predicting unit (83) configured to, in each of the periods before and after the shut-off period, predict a shift in generation power consumption which is an amount of power consumed by the heat pump unit for generating heat to maintain the temperature of the target at the set temperature, a shift in additional power consumption which is an amount of power needed for the heat pump unit to generate the divided SOP heat, and a shift in general power consumption which is an amount of power consumed by a device outside of the heating system; and
   an operation plan unit (84) configured to generate an operation plan for dividing and causing the generation of the SOP heat such that a peak value of overall power consumption in each of the periods before and after the shut-off period is at or below the permissible peak power, the overall power consumption being a total of the general power consumption, the generation power consumption, and the additional power consumption, and the heating system control unit (8) is configured to control the heat pump (101) according to the operation plan generated by the operation plan unit (84).

3. The heating system according to Claim 2,
   wherein the additional power consumption in the period before the shut-off period is an amount of power consumed by the heat pump (101) unit to increase the temperature of the target to a pre-SOP goal temperature by a start of the shut-off period, the pre-SOP goal temperature being higher than the set temperature,
   the additional power consumption in the period after the shut-off period is an amount of power consumed by the heat pump unit (101) to increase the temperature of the target at an end of the shut-off period to the set temperature,
   the heating system control unit (8) further includes a detecting unit configured to detect the temperature of the target and an ambient temperature, and
   the predicting unit (83) is configured to predict, based on a result of the detection by the detecting unit, the shift in the additional power consumption in each of the periods before and after the shut-off period.

4. The heating system according to Claim 3,
   wherein the operation plan unit (84) is configured to select, from among a plurality of the pre-SOP goal temperatures for the peak values of the overall power consumption in each of the periods before and after the shut-off period that are at or below the permissible peak power, the pre-SOP goal temperature for a lowest value of the peak values of the overall power consumption throughout each of the periods before and after the shut-off period.

5. The heating system according to Claim 3,
   wherein the operation plan (84) unit is configured to select, from among a plurality of the pre-SOP goal temperatures for the peak values of the overall power consumption in each of the periods before and after the shut-off period that are at or below the permissible peak power, the pre-SOP goal temperature for a lowest temperature of the target during the shut-off period that is greater than or equal to a threshold temperature.

6. The heating system according to Claim 5,
   wherein the predicting unit (83) is further configured to predict a shut-off time for each of the plurality of pre-SOP goal temperatures, the shut-off time being a period of time starting when the temperature of the target decreases from the pre-SOP goal temperature and ending when the temperature of the target reaches the threshold temperature, and

the heating system control unit (8) is configured to cause the heat pump unit to generate the SOP heat allotted to the period after the shut-off period at a point in time at which the shut-off time corresponding to the selected pre-SOP goal temperature has elapsed from the start of the shut-off period.

7.  The heating system according to Claim 6, wherein the operation plan unit (84) is configured to select, from among the plurality of pre-SOP goal temperatures, the pre-SOP goal temperature which maximizes the shut-off time.

8.   The heating system according to any one of Claim 2 to Claim 7,
    wherein the operation plan unit (84) is configured to execute processing of generating the operation plan upon receiving a signal including information specifying the shut-off period from the power supply source, the signal being received by the operation plan unit a predetermined amount of time before the start of the shut-off period.

9.  The heating system according to Claim 8,
    wherein the signal further includes information indicating the permissible peak power.

10.  The heating system according to any one of Claim 1 to Claim 8,
    wherein the heating system control unit (8) is configured to receive an input of the permissible peak power from a user.

11.  The heating system according to Claim 10,
    wherein the permissible peak power is set based on a thermal insulation efficiency of a building in which the heating system is installed.

12.  The heating system according to any one of Claim 9 to Claim 11,
    wherein the permissible peak power for the period before the shut-off period and the period after the shut-off period are set individually so that the permissible peak power for the period before the shut-off period is greater than the permissible peak power for the period after the shut-off period.

13.  The heating system according to any one of Claim 1 to Claim 12, comprising:

    a heating device including the heat pump unit (101), the radiator unit (103), and a heat pump (HP) control unit (106) which controls the heat pump unit in accordance with an instruction from the heating system control unit (8); and
    the heating system control unit (8) which is structurally separate from the heating device.

14.  A method of controlling a heating system which receives power from a power supply source and maintains a temperature of a target to within a predetermined temperature range including a predetermined set temperature,
    the heating system including a heat pump unit (101) configured to generate heat using power supplied from the power supply source, and
    a radiator unit (103) configured to radiate the heat generated by the heat pump unit to the target,
    the method of controlling the heating system comprising:

    causing the heat pump unit (101) to (i) stop generating the heat during a predetermined shut-off period and **characterised in that** the method of controlling the heating system further causes the heat pump unit to (ii) generate additional heat as shut-off period (SOP) heat in periods before and after the shut-off period, the SOP heat being an amount of heat required to be radiated during the shut-off period by the radiator unit to maintain the set temperature of the target,
    wherein in the causing, the generation of the SOP heat is divided between the periods before and after the shut-off period such that a peak value of power consumption in each of the periods before and after the shut-off period is at or below a permissible peak power.

15.  The method of controlling the heating system according to Claim 14,
    wherein the causing further comprises:

    predicting, in each of the periods before and after the shut-off period, a shift in generation power consumption which is an amount of power consumed by the heat pump unit (101) for generating heat to maintain the temperature of the target at the set temperature, a shift in additional power consumption which is an amount of power needed for the heat pump unit to generate the divided SOP heat, and a shift in general power consumption which is an amount of power consumed by a device outside of the heating system; and

generating an operation plan for dividing and causing the generation of the SOP heat such that a peak value of overall power consumption in each of the periods before and after the shut-off period is at or below the permissible peak power, the overall power consumption being a total of the general power consumption, the generation power consumption, and the additional power consumption,

wherein in the causing, the heat pump is controlled according to the operation plan generated in the generating.

16. The method of controlling the heating system according to Claim 15,
wherein the additional power consumption in the period before the shut-off period is an amount of power consumed by the heat pump unit to increase the temperature of the target to a pre-SOP goal temperature by a start of the shut-off period, the pre-SOP goal temperature being higher than the set temperature,
the additional power consumption in the period after the shut-off period is an amount of power consumed by the heat pump unit to increase the temperature of the target at an end of the shut-off period to the set temperature,
the causing further includes detecting the temperature of the target and an ambient temperature, and
in the predicting, the shift in the additional power consumption in each of the periods before and after the shut-off period is predicted based on a result of the detecting.

17. The method of controlling the heating system according to Claim 16,
wherein in the generating, the pre-SOP goal temperature for a lowest value of the peak values of the overall power consumption throughout each of the periods before and after the shut-off period is selected from among a plurality of the pre-SOP goal temperatures for the peak values of the overall power consumption in each of the periods before and after the shut-off period that are at or below the permissible peak power.

18. The method of controlling the heating system according to Claim 16,
wherein in the generating, the pre-SOP goal temperature for a lowest temperature of the target during the shut-off period that is greater than or equal to a threshold temperature is selected from among a plurality of the pre-SOP goal temperatures for the peak values of the overall power consumption in each of the periods before and after the shut-off period that are at or below the permissible peak power.

19. The method of controlling the heating system according to Claim 18,
wherein in the predicting, a shut-off time is further predicted for each of the plurality of pre-SOP goal temperatures, the shut-off time being a period of time starting when the temperature of the target decreases from the pre-SOP goal temperature and ending when the temperature of the target reaches the threshold temperature, and
in the causing, the heat pump unit (101) is caused to generate the SOP heat allotted to the period after the shut-off period at a point in time at which the shut-off time corresponding to the selected pre-SOP goal temperature has elapsed from the start of the shut-off period.

20. The method of controlling the heating system according to Claim 19,
wherein in the generating, the pre-SOP goal temperature which maximizes the shut-off time is selected from among the plurality of pre-SOP goal temperatures.

21. The method of controlling the heating system according to any one of Claim 15 to Claim 20,
wherein in the generating, a process for generating the operation plan is executed upon receiving a signal including information specifying the shut-off period from the power supply source (4), the signal being received a predetermined amount of time before the start of the shut-off period.

**Patentansprüche**

1. Heizungssystem (1), das Strom von einer Stromversorgungsquelle (4) empfängt und die Temperatur eines Ziels innerhalb eines vorbestimmten Temperaturbereichs einschließlich einer vorbestimmten Solltemperatur hält, wobei das Heizungssystem umfasst:

eine Wärmepumpeneinheit (101), die konfiguriert ist, um Wärme unter Verwendung des von der Stromversorgungsquelle zugeführten Stroms zu erzeugen,
eine Heizungskörpereinheit (103), die konfiguriert ist, um die durch die Wärmepumpeneinheit erzeugte Wärme zu dem Ziel zu strahlen, und

eine Heizungssystem-Steuereinheit (8), die konfiguriert ist, um die Wärmepumpeneinheit dazu zu veranlassen, das Erzeugen der Wärme während einer vorbestimmten Ausschaltperiode zu stoppen, **dadurch gekennzeichnet, dass** die Heizungssystem-Steuereinheit die Wärmepumpeneinheit dazu veranlasst, zusätzliche Wärme als eine Ausschaltperioden-Wärme in Perioden vor und nach der Ausschaltperiode zu erzeugen, wobei die Ausschaltperioden-Wärme eine Wärmemenge ist, die während der Ausschaltperiode durch die Heizungskörpereinheit gestrahlt werden muss, um die Solltemperatur des Ziels aufrechtzuerhalten,

wobei die Heizungssystem-Steuereinheit konfiguriert ist, um zu veranlassen, das die Erzeugung der Ausschaltperioden-Wärme zwischen den Perioden vor und nach der Ausschaltperiode aufgeteilt wird, sodass ein Spitzenwert des Stromverbrauchs in jeder der Perioden vor und nach der Ausschaltperiode bei oder unter einem zulässigen Spitzenstrom liegt.

2. Heizungssystem nach Anspruch 1, wobei die Heizungssystem-Steuereinheit (8) weiterhin umfasst:

eine Voraussageeinheit (83), die konfiguriert ist, um in jeder der Perioden vor und nach der Ausschaltperiode einen Wechsel im Erzeugungsstromverbrauch, der die durch die Wärmepumpeneinheit für das Erzeugen von Wärme zum Halten der Temperatur des Ziels bei der Solltemperatur verbrauchte Strommenge ist, einen Wechsel in dem zusätzlichen Stromverbrauch, der die für die Wärmepumpeneinheit zum Erzeugen der geteilten Ausschaltperioden-Wärme erforderliche Strommenge ist, und einen Wechsel im allgemein Stromverbrauch, der die durch eine Einrichtung außerhalb des Heizungssystems verbrauchte Strommenge ist, vorauszusagen, und

eine Betriebsplanungseinheit (84), die konfiguriert ist, um einen Betriebsplan für das Teilen und das Veranlassen der Erzeugung der Ausschaltperioden-Wärme derart zu erzeugen, dass ein Spitzenwert des Gesamtstromverbrauchs in jeder der Perioden vor und nach der Ausschaltperiode bei oder unter dem zulässigen Spitzenstrom liegt, wobei der Gesamtstromverbrauch die Summe aus dem allgemeinen Stromverbrauch, dem Erzeugungsstromverbrauch und dem zusätzlichen Stromverbrauch ist,

wobei die Heizungssystem-Steuereinheit (8) konfiguriert ist, um die Wärmepumpe (101) gemäß dem durch die Betriebsplanungseinheit (84) erzeugten Betriebsplan zu steuern.

3. Heizungssystem nach Anspruch 2, wobei:

der zusätzliche Stromverbrauch in der Periode vor der Ausschaltperiode eine durch die Wärmepumpeneinheit (101) für das Erhöhen der Temperatur des Ziels zu einer vor-Ausschaltperiode-Zieltemperatur am Start der Ausschaltperiode verbrauchte Strommenge ist, wobei die vor-Ausschaltperiode-Zieltemperatur höher als die Solltemperatur ist,

der zusätzliche Stromverbrauch in der Periode nach der Ausschaltperiode eine durch die Wärmepumpeneinheit (101) für das Erhöhen der Temperatur des Ziels am Ende der Ausschaltperiode zu der Solltemperatur verbrauchte Strommenge ist,

die Heizungssystem-Steuereinheit (8) weiterhin eine Erfassungseinheit umfasst, die konfiguriert ist, um die Temperatur des Ziels und eine Umgebungstemperatur zu erfassen, und

die Voraussageeinheit (83) konfiguriert ist, um basierend auf dem Erfassungsergebnis der Erfassungseinheit den Wechsel in dem zusätzlichen Stromverbrauch in jeder der Perioden vor und nach der Ausschaltperiode vorauszusagen.

4. Heizungssystem nach Anspruch 3, wobei:

die Betriebsplanungseinheit (84) konfiguriert ist, um aus einer Vielzahl von vor-Ausschaltperiode-Zieltemperaturen für die Spitzenwerte des Gesamtstromverbrauchs in jeder der Perioden vor und nach der Ausschaltperiode, die bei oder unter dem zulässigen Spitzenstrom liegen, die vor-Ausschaltperiode-Zieltemperatur für einen niedrigsten Wert der Spitzenwerte des Gesamtstromverbrauchs über alle Perioden vor und nach der Ausschaltperiode auszuwählen.

5. Heizungssystem nach Anspruch 3, wobei:

die Betriebsplanungseinheit (84) konfiguriert ist, um aus einer Vielzahl von vor-Ausschaltperiode-Zieltemperaturen für die Spitzenwerte des Gesamtstromverbrauchs in jeder der Perioden vor und nach der Ausschaltperiode, die bei oder unter dem zulässigen Spitzenstrom liegen, die vor-Ausschaltperiode-Zieltemperatur für eine niedrigste Temperatur des Ziels während der Ausschaltperiode, die größer oder gleich einer Schwelltemperatur ist, auszuwählen.

6. Heizungssystem nach Anspruch 5, wobei:

   die Voraussageeinheit (83) weiterhin konfiguriert ist, um eine Ausschaltzeit für jede aus der Vielzahl von vor-Ausschaltperiode-Zieltemperaturen vorauszusagen, wobei die Ausschaltzeit eine Zeitperiode ist, die beginnt, wenn die Temperatur des Ziels von der vor-Ausschaltperiode-Zieltemperatur sinkt, und endet, wenn die Temperatur des Ziels die Schwelltemperatur erreicht, und
   die Heizungssystem-Steuereinheit (8) konfiguriert ist, um zu veranlassen, dass die Wärmepumpeneinheit die für die Periode nach der Ausschaltperiode zugewiesene Ausschaltperioden-Wärme zu einem Zeitpunkt erzeugt, zu dem die Ausschaltzeit in Entsprechung zu der ausgewählten vor-Ausschaltperiode-Zieltemperatur ab dem Start der Ausschaltperiode abgelaufen ist.

7. Heizungssystem nach Anspruch 6, wobei:

   die Betriebsplanungseinheit (84) konfiguriert ist, um aus der Vielzahl von vor-Ausschaltperiode-Zieltemperaturen die vor-Ausschaltperiode-Zieltemperatur zu wählen, die die Ausschaltzeit maximiert.

8. Heizungssystem nach einem der Ansprüche 2 bis 7, wobei:

   die Betriebsplanungseinheit (84) konfiguriert ist, um eine Verarbeitung zum Erzeugen des Betriebsplans nach dem Empfangen eines Signals, das Informationen zum Spezifizieren der Ausschaltperiode enthält, von der Stromversorgungsquelle auszuführen, wobei das Signal durch die Betriebsplanungseinheit zu einer vorbestimmten Zeitdauer vor dem Start der Ausschaltperiode empfangen wird.

9. Heizungssystem nach Anspruch 8, wobei:

   das Signal weiterhin Informationen enthält, die den zulässigen Spitzenstrom angeben.

10. Heizungssystem nach einem der Ansprüche 1 bis 8, wobei die Heizungssystem-Steuereinheit (8) konfiguriert ist, um eine Eingabe des zulässigen Spitzenstroms von einem Benutzer zu empfangen.

11. Heizungssystem nach Anspruch 10, wobei:

   der zulässige Spitzenstrom basierend auf der Wärmeisolationseffizienz eines Gebäudes, in dem das Heizungssystem installiert ist, gesetzt ist.

12. Heizungssystem nach einem der Ansprüche 9 bis 11, wobei:

   der zulässige Spitzenstrom für die Periode vor der Ausschaltperiode und für die Periode nach der Ausschaltperiode jeweils individuell gesetzt ist, sodass der zulässige Spitzenstrom für die Periode vor der Ausschaltperiode größer ist als der zulässige Spitzenstrom für die Periode nach der Ausschaltperiode.

13. Heizungssystem nach einem der Ansprüche 1 bis 12, das umfasst:

   eine Heizungsvorrichtung, die die Wärmepumpeneinheit (101), die Heizkörpereinheit (102) und eine Wärmepumpen-Steuereinheit (106), die die Wärmepumpeneinheit gemäß einem Befehl von der Heizungssystem-Steuereinheit steuert, enthält, und
   die Heizungssystem-Steuereinheit (8), die strukturell separat von der Heizungsvorrichtung ist.

14. Verfahren zum Steuern eines Heizungssystems, das Strom von einer Stromversorgungsquelle empfängt und die Temperatur eines Ziels innerhalb eines vorbestimmten Temperaturbereichs einschließlich einer vorbestimmten Solltemperatur hält, wobei das Heizungssystem umfasst:

   eine Wärmepumpeneinheit (101), die konfiguriert ist, um Wärme unter Verwendung des von der Stromversorgungsquelle zugeführten Stroms zu erzeugen, und
   eine Heizungskörpereinheit (103), die konfiguriert ist, um die durch die Wärmepumpeneinheit erzeugte Wärme zu dem Ziel zu strahlen,
   wobei das Verfahren zum Steuern eines Heizungssystems umfasst:

Veranlassen der Wärmepumpeneinheit (101), (i) das Erzeugen der Wärme während einer vorbestimmten Ausschaltperiode zu stoppen, **dadurch gekennzeichnet, dass** das Verfahren zum Steuern eines Heizungssystems weiterhin die Wärmepumpeneinheit dazu veranlasst, (ii) zusätzliche Wärme als eine Ausschaltperioden-Wärme in Perioden vor und nach der Ausschaltperiode zu erzeugen, wobei die Ausschaltperioden-Wärme eine Wärmemenge ist, die während der Ausschaltperiode durch die Heizungskörpereinheit gestrahlt werden muss, um die Solltemperatur des Ziels aufrechtzuerhalten,

wobei in dem Veranlassen die Erzeugung der Ausschaltperioden-Wärme zwischen den Perioden vor und nach der Ausschaltperiode aufgeteilt wird, sodass ein Spitzenwert des Stromverbrauchs in jeder der Perioden vor und nach der Ausschaltperiode bei oder unter einem zulässigen Spitzenstrom liegt.

15. Verfahren zum Steuern eines Heizungssystems nach Anspruch 14, wobei das Veranlassen weiterhin umfasst:

Voraussagen in jeder der Perioden vor und nach der Ausschaltperiode eines Wechsels im Erzeugungsstromverbrauch, der die durch die Wärmepumpeneinheit (101) für das Erzeugen von Wärme zum Halten der Temperatur des Ziels bei der Solltemperatur verbrauchte Strommenge ist, eines Wechsels in dem zusätzlichen Stromverbrauch, der die für die Wärmepumpeneinheit zum Erzeugen der geteilten Ausschaltperioden-Wärme erforderliche Strommenge ist, und eines Wechsels im allgemein Stromverbrauch, der die durch eine Einrichtung außerhalb des Heizungssystems verbrauchte Strommenge ist, und

Erzeugen eines Betriebsplans für das Teilen und das Veranlassen der Erzeugung der Ausschaltperioden-Wärme derart, dass ein Spitzenwert des Gesamtstromverbrauchs in jeder der Perioden vor und nach der Ausschaltperiode bei oder unter dem zulässigen Spitzenstrom liegt, wobei der Gesamtstromverbrauch die Summe aus dem allgemeinen Stromverbrauch, dem Erzeugungsstromverbrauch und dem zusätzlichen Stromverbrauch ist,

wobei in dem Veranlassen die Wärmepumpe gemäß dem in dem Erzeugen erzeugten Betriebsplan gesteuert wird.

16. Verfahren zum Steuern eines Heizungssystems nach Anspruch 15, wobei:

der zusätzliche Stromverbrauch in der Periode vor der Ausschaltperiode eine durch die Wärmepumpeneinheit für das Erhöhen der Temperatur des Ziels zu einer vor-Ausschaltperiode-Zieltemperatur am Start der Ausschaltperiode verbrauchte Strommenge ist, wobei die vor-Ausschaltperiode-Zieltemperatur höher als die Solltemperatur ist,

der zusätzliche Stromverbrauch in der Periode nach der Ausschaltperiode eine durch die Wärmepumpeneinheit für das Erhöhen der Temperatur des Ziels am Ende der Ausschaltperiode zu der Solltemperatur verbrauchte Strommenge ist,

das Veranlassen weiterhin das Erfassen der Temperatur des Ziels und eine Umgebungstemperatur umfasst, und in dem Voraussagen der Wechsel in dem zusätzlichen Stromverbrauch in jeder der Perioden vor und nach der Ausschaltperiode basierend auf dem Erfassungsergebnis vorausgesagt wird.

17. Verfahren zum Steuern eines Heizungssystems nach Anspruch 16, wobei:

in dem Erzeugen die vor-Ausschaltperiode-Zieltemperatur für einen niedrigsten Wert der Spitzenwerte des Gesamtstromverbrauchs über jede der Perioden vor und nach der Ausschaltperiode aus einer Vielzahl von vor-Ausschaltperiode-Zieltemperaturen für die Spitzenwerte des Gesamtstromverbrauchs in jeder der Perioden vor und nach der Ausschaltperiode, die bei oder unter dem zulässigen Spitzenstrom liegen, ausgewählt wird.

18. Verfahren zum Steuern eines Heizungssystems nach Anspruch 16, wobei:

in dem Erzeugen die vor-Ausschaltperiode-Zieltemperatur für eine niedrigste Temperatur des Ziels während der Ausschaltperiode, die größer oder gleich einer Schwelltemperatur ist, aus einer Vielzahl von vor-Ausschaltperiode-Zieltemperaturen für die Spitzenwerte des Gesamtstromverbrauchs in jeder der Perioden vor und nach der Ausschaltperiode, die bei oder unter dem zulässigen Spitzenstrom liegen, ausgewählt wird.

19. Verfahren zum Steuern eines Heizungssystems nach Anspruch 18, wobei:

in dem Voraussagen eine Ausschaltzeit weiterhin für jede aus der Vielzahl von vor-Ausschaltperiode-Zieltemperaturen vorausgesagt wird, wobei die Ausschaltzeit eine Zeitperiode ist, die beginnt, wenn die Temperatur des Ziels von der vor-Ausschaltperiode-Zieltemperatur sinkt, und endet, wenn die Temperatur des Ziels die Schwelltemperatur erreicht, und

in dem Veranlassen die Wärmepumpeneinheit (101) veranlasst wird, die für die Periode nach der Ausschaltperiode zugewiesene Ausschaltperioden-Wärme zu einem Zeitpunkt zu erzeugen, zu dem die Ausschaltzeit in Entsprechung zu der ausgewählten vor-Ausschaltperiode-Zieltemperatur ab dem Start der Ausschaltperiode abgelaufen ist.

20. Verfahren zum Steuern des Heizsystems nach Anspruch 19, wobei:

in dem Erzeugen die vor-Ausschaltperiode-Zieltemperatur, die die Ausschaltzeit maximiert, aus der Vielzahl von Vor-Ausschaltperiode-Zieltemperaturen ausgewählt wird.

21. Verfahren zum Steuern des Heizungssystems nach einem der Ansprüche 15 bis 20, wobei:

in dem Erzeugen ein Prozess zum Erzeugen des Betriebsplans nach dem Empfangen eines Signals, das Informationen zum Spezifizieren der Ausschaltperiode enthält, von der Stromversorgungsquelle (4) ausgeführt wird, wobei das Signal zu einer vorbestimmten Zeitdauer vor dem Start der Ausschaltperiode empfangen wird.

**Revendications**

1. Système de chauffage (1) qui reçoit de la puissance provenant d'une source d'alimentation (4) et maintient la température d'une cible à l'intérieur d'une plage de températures prédéterminée incluant une température prédéterminée fixée, le système de chauffage comprenant :

une unité de pompe à chaleur (101) configurée pour générer de la chaleur en utilisant l'énergie fournie par la source d'alimentation,
une unité formant élément radiant configurée pour rayonner la chaleur générée par l'unité de pompe à chaleur vers la cible, et
une unité de commande de système de chauffage (8) configurée pour amener l'unité de pompe à chaleur à stopper la génération d'énergie pendant une période prédéterminée d'interruption, **caractérisée en ce que** l'unité de commande du système de chauffage amène l'unité de pompe à chaleur à générer, dans des périodes avant et après la période d'interruption, de la chaleur supplémentaire comme chaleur de période d'interruption (SOP), la chaleur de période SOP représentant une quantité de chaleur requise pour être rayonnée par l'unité formant élément radiant pendant la période d'interruption afin de maintenir la température fixée de la cible, dans lequel l'unité de commande de système de chauffage est configurée pour amener à diviser la génération de la chaleur de période SOP entre les périodes avant et après la période d'interruption de telle sorte que la valeur crête de la consommation d'énergie dans chacune des périodes avant et après la période d'interruption soit au niveau ou en dessous de la puissance crête autorisée.

2. Système de chauffage selon la revendication 1, dans lequel l'unité de commande de système de chauffage (8) inclut en outre :

une unité de prédiction (83) configurée pour prédire, dans chacune des périodes avant et après la période d'interruption, une variation de consommation de l'énergie de génération qui représente la quantité d'énergie consommée par l'unité de pompe à chaleur pour générer de la chaleur pour maintenir la température de la cible à la température fixée, une variation de la consommation supplémentaire d'énergie qui représente une quantité d'énergie nécessaire pour que l'unité de pompe à chaleur génère la chaleur divisée de période SOP, ainsi qu'une variation de la consommation générale d'énergie qui représente la quantité d'énergie consommée par un dispositif à l'extérieur du système de chauffage, et
une unité de planification d'opérations (84) configurée pour générer un plan d'opérations permettant de diviser et d'amener la génération de la chaleur de période SOP de telle sorte que la valeur crête de la consommation globale d'énergie dans chacune des périodes avant et après la période d'interruption soit au niveau ou en dessous de la puissance crête autorisée, la consommation globale d'énergie représentant le total de la consommation générale d'énergie, de la consommation d'énergie de génération et de la consommation supplémentaire d'énergie, et
l'unité de commande de système de chauffage (8) est configurée pour commander la pompe à chaleur (101) en fonction du plan d'opérations généré par l'unité de planification d'opérations (84).

**3.** Système de chauffage selon la revendication 2, dans lequel la consommation supplémentaire d'énergie dans la période avant la période d'interruption représente la quantité d'énergie consommée par l'unité de pompe à chaleur (101) pour augmenter la température de la cible jusqu'à une température objectif avant période SOP par un démarrage de la période d'interruption, la température objectif avant période SOP étant supérieure à la température fixée, la consommation supplémentaire d'énergie dans la période après la période d'interruption représente la quantité d'énergie consommée par l'unité de pompe à chaleur (101) pour augmenter la température de la cible à la fin de la période d'interruption jusqu'à la température fixée,
l'unité de commande de système de chauffage (8) inclut en outre une unité de détection configurée pour détecter la température de la cible et la température ambiante, et
l'unité de prédiction (83) est configurée pour prédire, sur la base du résultat de la détection réalisée par l'unité de détection, la variation de consommation supplémentaire d'énergie dans chacune des périodes avant et après la période d'interruption.

**4.** Système de chauffage selon la revendication 3,
dans lequel l'unité de planification d'opérations (84) est configurée pour sélectionner, parmi la pluralité des températures objectif avant période SOP, les valeurs crête de la consommation globale d'énergie dans chacune des périodes avant et après la période d'interruption qui sont au niveau ou en dessous de la puissance crête autorisée, la température objectif avant période SOP pour la valeur la plus basse des valeurs crête de la consommation globale d'énergie sur chacune des périodes avant et après la période d'interruption.

**5.** Système de chauffage selon la revendication 3,
dans lequel l'unité de planification d'opérations (84) est configurée pour sélectionner, parmi la pluralité de températures objectif avant période SOP, les valeurs crête de la consommation globale d'énergie dans chacune des périodes avant et après la période d'interruption, lesquelles se trouvent au niveau ou en dessous de la puissance crête autorisée, la température objectif avant période SOP pour la température la plus basse de la cible pendant la période d'interruption qui est supérieure ou égale à une température seuil.

**6.** Système de chauffage selon la revendication 5,
dans lequel l'unité de prédiction (83) est en outre configurée pour prédire une durée d'interruption pour chacune de la pluralité des températures objectif avant période SOP, la durée d'interruption représentant un intervalle de temps débutant lorsque la température de la cible diminue à partir de la température objectif avant période SOP et se terminant lorsque la température de la cible atteint la température seuil, et
l'unité de commande de système de chauffage (8) est configurée pour amener l'unité de pompe à chaleur à générer la chaleur de période SOP allouée pour la période après la période d'interruption jusqu'à un instant dans le temps auquel s'est écoulée la durée d'interruption correspondant à la température objectif avant période SOP sélectionnée à partir du début de la période d'interruption.

**7.** Système de chauffage selon la revendication 6,
dans lequel l'unité de planification d'opérations (84) est configurée pour sélectionner, parmi une pluralité de températures objectif avant période SOP, la température objectif avant période SOP qui maximise la durée d'interruption.

**8.** Système de chauffage selon l'une quelconque des revendications 2 à 7,
dans lequel l'unité de planification d'opérations (84) est configurée pour exécuter le traitement de génération du plan d'opérations à la réception d'un signal incluant des informations spécifiant la période d'interruption à partir de la source d'alimentation, le signal étant reçu par l'unité de planification d'opérations à un instant prédéterminé dans le temps avant le début de la période d'interruption.

**9.** Système de chauffage selon la revendication 8,
dans lequel le signal inclut en outre des informations indiquant la puissance crête autorisée.

**10.** Système de chauffage selon l'une quelconque des revendications 1 à 8,
dans lequel l'unité de commande de système de chauffage (8) est configurée pour recevoir une entrée de l'utilisateur concernant la puissance crête autorisée.

**11.** Système de chauffage selon la revendication 10,
dans lequel la puissance crête autorisée est établie sur la base d'un rendement d'isolation thermique d'un bâtiment dans lequel est installé le système de chauffage.

**12.** Système de chauffage selon l'une quelconque des revendications 9 à 11,
dans lequel les puissances crête autorisées pour la période avant la période d'interruption et pour la période après la période d'interruption sont établies individuellement de telle sorte que la puissance crête autorisée pour la période avant la période d'interruption est supérieure à la puissance crête autorisée pour la période après la période d'interruption.

**13.** Système de chauffage selon l'une quelconque des revendications 1 à 12 comprenant :

un dispositif de chauffage incluant l'unité de pompe à chaleur (101), l'unité formant élément radiant (103) et une unité de commande de pompe à chaleur (HP) (106) qui commande l'unité de pompe à chaleur en fonction d'une instruction provenant de l'unité de commande de système de chauffage (8), et
l'unité de commande de système de chauffage (8), qui est structurellement séparée du dispositif de chauffage.

**14.** Procédé de commande d'un système de chauffage qui reçoit de l'énergie provenant d'une source d'alimentation et maintient la température d'une cible à l'intérieur d'une plage prédéterminée de températures incluant une température prédéterminée fixée,
le système de chauffage incluant une unité de pompe à chaleur (101) configurée pour générer de la chaleur en utilisant de l'énergie fournie par la source d'alimentation, et
une unité formant élément radiant (103) configurée pour rayonner la chaleur générée par l'unité de pompe à chaleur vers la cible,
le procédé de commande du système de chauffage comprenant :

le fait d'amener l'unité de pompe à chaleur (101) à : (i) arrêter la génération de la chaleur pendant une période prédéterminée d'interruption et **caractérisée en ce que** le procédé de commande du système de chauffage amène en outre l'unité de pompe à chaleur à (ii) générer de la chaleur supplémentaire comme chaleur de période d'interruption (SOP) dans des périodes avant et après la période d'interruption, la chaleur de période SOP représentant la quantité de chaleur requise pour être rayonnée pendant la période d'interruption par l'unité formant élément radiant pour maintenir la température fixée de la cible,
dans lequel, dans l'opération, la génération de la chaleur de période SOP est divisée entre les périodes avant et après la période d'interruption de telle sorte que la valeur crête de la consommation d'énergie dans chacune des périodes avant et après la période d'interruption se trouve au niveau ou en dessous d'une puissance crête autorisée.

**15.** Procédé de commande du système de chauffage selon la revendication 14,
dans lequel l'opération comprend en outre :

la prédiction, dans chacune des périodes avant et après la période d'interruption, d'une variation de consommation de l'énergie de génération qui représente la quantité d'énergie consommée par l'unité de pompe à chaleur (101) pour générer de la chaleur afin de maintenir la température de la cible à la température fixée, d'une variation de la consommation supplémentaire d'énergie qui représente une quantité d'énergie nécessaire pour que l'unité de pompe à chaleur génère la chaleur divisée de période SOP, ainsi que d'une variation de la consommation générale d'énergie qui représente la quantité d'énergie consommée par un dispositif à l'extérieur du système de chauffage, et
la génération d'un plan d'opérations permettant de diviser et d'amener la génération de la chaleur de période SOP de telle sorte que la valeur crête de la consommation globale d'énergie dans chacune des périodes avant et après la période d'interruption soit au niveau ou en dessous de la puissance crête autorisée, la consommation globale d'énergie représentant le total de la consommation générale d'énergie, de la consommation d'énergie de génération et de la consommation supplémentaire d'énergie,
dans lequel, dans l'opération, la pompe à chaleur (101) est commandée en fonction du plan d'opérations produit lors de la génération.

**16.** Procédé de commande du système de chauffage selon la revendication 15,
dans lequel la consommation supplémentaire d'énergie dans la période avant la période d'interruption représente une quantité d'énergie consommée par l'unité de pompe à chaleur pour augmenter la température de la cible jusqu'à une température objectif avant période SOP par un démarrage de la période d'interruption, la température objectif avant période SOP étant supérieure à la température fixée,
la consommation supplémentaire d'énergie dans la période après la période d'interruption représente la quantité d'énergie consommée par l'unité de pompe à chaleur pour augmenter la température de la cible à la fin de la période d'interruption jusqu'à la température fixée,

l'opération inclut en outre la détection de la température de la cible et de la température ambiante, et

lors de la prédiction, la variation de la consommation supplémentaire d'énergie dans chacune des périodes avant et après la période d'interruption est prédite sur la base du résultat de la détection.

**17.** Procédé de commande du système de chauffage selon la revendication 16,

dans lequel, lors de la génération, la température objectif avant période SOP, pour la valeur la plus basse des valeurs crête de la consommation globale d'énergie sur chacune des périodes avant et après la période d'interruption, est sélectionnée parmi une pluralité de températures objectif avant période SOP pour les valeurs crête de la consommation globale d'énergie dans chacune des périodes avant et après la période d'interruption, lesquelles sont au niveau ou en dessous de la puissance crête autorisée.

**18.** Procédé de commande du système de chauffage selon la revendication 16,

dans lequel, lors de la génération, la température objectif avant période SOP pour la température la plus basse de la cible pendant la période d'interruption, laquelle est supérieure ou égale à une température seuil, est sélectionnée parmi une pluralité de températures objectif avant période SOP pour les valeurs crête de la consommation globale d'énergie dans chacune des périodes avant et après la période d'interruption, lesquelles sont au niveau ou en dessous de la puissance crête autorisée.

**19.** Procédé de commande du système de chauffage selon la revendication 18,

dans lequel, lors de la prédiction, une durée d'interruption est en outre prédite pour chacune de la pluralité des températures objectif avant période SOP, la durée d'interruption étant un intervalle de temps débutant lorsque la température de la cible diminue à partir de la température objectif avant période SOP et se terminant lorsque la température de la cible a atteint la température seuil, et

lors de l'opération, l'unité de pompe à chaleur (101) est amenée à générer la chaleur de période SOP allouée à la période après la période d'interruption .à un point dans le temps auquel la durée d'interruption correspondant à la température objectif avant période SOP s'est écoulée depuis le début de la période d'interruption.

**20.** Procédé de commande du système de chauffage selon la revendication 19,

dans lequel, lors de la génération, la température objectif avant période SOP qui maximise la durée d'interruption est sélectionnée parmi la pluralité de températures objectif avant période SOP.

**21.** Procédé de commande du système de chauffage selon l'une quelconque des revendications 15 à 20,

dans lequel, lors de la génération, un procédé de génération du plan d'opérations est exécuté à la réception d'un signal incluant des informations spécifiant la période d'interruption à partir de la source d'alimentation (4), le signal étant reçu à un instant prédéterminé avant le début de la période d'interruption.

## FIG. 1

Legend:
- ------ Power
- — · — Information
- ——— Hot water

Energy supplier (4) → First power meter (6) → Electric load (5)

Heating system control unit (8)

Second power meter (7)

Heat pump heating device (100)

Heat pump (101) → Heat exchanger (102) → Heating device (103)

EP 2 541 155 B1

## FIG. 2

# FIG. 3

Start

S11

Pre-SOP shut-off signal received from energy supplier?  — NO

YES — S12

Select pre-SOP goal room temperature (21°C - 24°C)

S13

Predict power consumption for periods before and after SOP

S14

Predict general power consumption for periods before and after SOP

Predicting shifts (S13, S14)

S15

Calculate peak overall power consumption value

S16

Repeat selection of pre-SOP goal room temperature

Generating operation plan

S17

Select pre-SOP goal room temperature corresponding to peak overall power consumption value at or below permissible peak power

End

FIG. 4A

EP 2 541 155 B1

| Time | Room temperature | Amount of heat to maintain room temperature | Room heating amount | HP heat consumption amount | General power consumption | Overall power consumption |
|---|---|---|---|---|---|---|
| 17:00 | 20 ℃ | 6000 W | 748 W | 2249 W | 1640 W | 3889 W |
| 17:15 | 21 ℃ | 6300 W | 748 W | 2349 W | 1560 W | 3909 W |
| 17:30 | 22 ℃ | 6600 W | 748 W | 2449 W | 1320 W | 3769 W |
| 17:45 | 23 ℃ | 6900 W | 748 W | 2549 W | 1451 W | 4000 W |
| 18:00 | 24 ℃ | *** | *** | *** | *** | *** |

FIG. 4B

| Pre-SOP goal room temperature | Peak overall power consumption value in pre-SOP surplus period | Peak overall power consumption value in post-SOP surplus period | Peak overall power consumption value |
|---|---|---|---|
| 21 °C | 2 kW | 6 kW | 6 kW |
| 22 °C | 2.5 kW | 5 kW | 5 kW |
| 23 °C | 3.2 kW | 4.5 kW | 4.5 kW |
| 24 °C | 4 kW | 4 kW | 4 kW |

EP 2 541 155 B1

## FIG. 5A

EP 2 541 155 B1

## FIG. 5B

Overall power consumption [kW]

Pre-SOP heating period

SOP

Post-SOP heating period

Permissive peak power (4.5 kW)

Time

17:00   18:00   19:00   20:00

— · — · — 21°C

— — — — 22°C

· · · · · · · · · 23°C

———— 24°C

— · · — General power consumption

## FIG. 6

Start

S11

Pre-SOP
shut-off signal
received from energy
supplier? — NO

YES

S12

Select pre-SOP goal room
temperature
(21°C - 26°C)

S21

Predict decrease in room
temperature during SOP

S13

Predict power consumption
for periods before and
after SOP

S14

Predict general power
consumption for periods
before and after SOP

Predicting
shifts
(S21, S13,
S14)

S15

Calculate peak overall
power consumption value

S16

Repeat selection of
pre-SOP goal room
temperature

S22

Select pre-SOP goal room
temperature corresponding
to SOP lowest room
temperature at or above
threshold value and peak
overall power consumption
value at or below
permissible peak power

Generating
operation
plan

End

EP 2 541 155 B1

## FIG. 7

| Pre-SOP goal room temperature | Shut-off period lowest room temperature | Peak overall power consumption value in pre-SOP heating period | Peak overall power consumption value in post-SOP heating period | Peak overall power consumption value |
|---|---|---|---|---|
| 21 ℃ | 11 ℃ | 2 kW | 6 kW | 6 kW |
| 22 ℃ | 12 ℃ | 2.5 kW | 5 kW | 5 kW |
| 23 ℃ | 13 ℃ | 3.2 kW | 4.5 kW | 4.5 kW |
| 24 ℃ | 14 ℃ | 4 kW | 4 kW | 4 kW |
| 25 ℃ | 16 ℃ | 4.5 kW | 3 kW | 4.5 kW |
| 26 ℃ | 17 ℃ | 5 kW | 2 kW | 5 kW |

## FIG. 8

```
                    ┌──────────────┐
                    │    Start     │
                    └──────┬───────┘
                           │
                           ▼            S11
                    ╱─────────────╲
                   ╱   Pre-SOP     ╲
                  ╱  shut-off signal ╲  NO
                 ╱ received from energy╲────────┐
                  ╲    supplier?     ╱          │
                   ╲               ╱            │
                    ╲─────────────╱             │
                      YES │          S12        │
                          ▼                     │
        ┌──►┌──────────────────────────┐        │
        │   │ Select pre-SOP goal room │        │
        │   │ temperature              │        │
        │   │ (21°C - 26°C)            │        │
        │   └──────────┬───────────────┘        │
        │              ▼            S31          │
        │   ┌──────────────────────────┐        │
        │   │ Predict decrease in room │        │
        │   │ temperature during SOP,  │        │
        │   │ determine shut-off time  │        │
        │   └──────────┬───────────────┘        │
        │              ▼            S13          │
        │   ┌──────────────────────────┐        │
        │   │ Predict power consumption│        │
        │   │ for periods before and   │        │
        │   │ after SOP                │        │
        │   └──────────┬───────────────┘        │
        │              ▼            S14          │
        │   ┌──────────────────────────┐        │
        │   │ Predict general power    │        │
        │   │ consumption for periods  │        │
        │   │ before and after SOP     │        │
        │   └──────────┬───────────────┘        │
        │              ▼            S15          │
        │   ┌──────────────────────────┐        │
        │   │ Calculate peak overall   │        │
        │   │ power consumption value  │        │
        │   └──────────┬───────────────┘        │
        │              ▼            S16          │
        │   ┌──────────────────────────┐        │
        └───│ Repeat selection of pre- │        │
            │ SOP goal room temperature│        │
            └──────────┬───────────────┘        │
                       ▼            S32          │
            ┌──────────────────────────┐        │
            │ Select pre-SOP goal room │        │
            │ temperature corresponding│        │
            │ to peak overall power    │        │
            │ consumption value at or  │        │
            │ below permissible peak   │        │
            │ power                    │        │
            └──────────┬───────────────┘        │
                       ▼                         │
                       ◄─────────────────────────┘
                       ▼
                ┌──────────────┐
                │     End      │
                └──────────────┘
```

Predicting shifts (S21, S13, S14)

Generating operation plan

# FIG. 9A

EP 2 541 155 B1

FIG. 9B

FIG. 10

| Pre-SOP goal room temperature | Shut-off time | Peak overall power consumption value in pre-SOP heating period | Peak overall power consumption value in post-SOP heating period | Peak overall power consumption value |
|---|---|---|---|---|
| 21 ℃ | 0.4 h | 2 kW | 4.3 kW | 4.3 kW |
| 22 ℃ | 0.6 h | 2.5 kW | 4.4 kW | 4.4 kW |
| 23 ℃ | 0.8 h | 3.2 kW | 4 kW | 4 kW |
| 24 ℃ | 0.9 h | 4 kW | 4.2 kW | 4.2 kW |
| 25 ℃ | 1.0 h (not shortened) | 4.5 kW | 4 kW | 4.5 kW |
| 26 ℃ | 1.0 h (not shortened) | 5 kW | 3.5 kW | 5 kW |

EP 2 541 155 B1

## FIG. 11

| Heating surface area | 50 m$^2$ | 100 m$^2$ | 150 m$^2$ |
|---|---|---|---|
| Permissible peak power | 4 kW | 6 kW | 9 kW |

## FIG. 12

| Heat pump heating device rated capacity | 6 kW | 7 kW | 9 kW |
|---|---|---|---|
| Permissible peak power | 4 kW | 6 kW | 9 kW |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005030705 B
- JP 2009204298 A

- JP 2009204299 A